# EUROPÄISCHE PATENTSCHRIFT

(11) **EP 3 335 844 B1**
(45) Veröffentlichungstag und Bekanntmachung des Hinweises auf die Patenterteilung: **30.10.2019**
(21) Anmeldenummer: 16405035.3
(22) Anmeldetag: 15.12.2016
(51) Int. Cl.: B25J 21/00, B08B 15/02, B65B 3/00, B65B 7/28, B65B 43/46, B65B 43/54, B65B 55/02, B65B 55/04, B65B 63/00

(54) **KONSTRUKTIVER AUFBAU EINES CONTAINMENTS, BESTIMMT ZUR AUTOMATISIERTEN PRODUKTION PHARMAZEUTISCHER ODER BIOTECHNISCHER ARTIKEL**
CONSTRUCTIVE STRUCTURE OF A CONTAINMENT, INTENDED FOR AUTOMATED PRODUCTION OF PHARMACEUTICAL OR BIOTECHNICAL ARTICLE
CONCEPTION D'UN CONFINEMENT DESTINÉ À LA PRODUCTION AUTOMATISÉE D'ARTICLE PHARMACEUTIQUE OU BIOTECHNIQUE

(43) Veröffentlichungstag der Anmeldung: 20.06.2018
(73) Patentinhaber: Pharma Integration S.R.L., 53100 Siena (IT)
(72) Erfinder: Bechini, Claudio, 53100 Siena (IT); Sigwarth, Volker, 4334 Sisseln (CH)
(74) Vertreter: Ullrich, Gerhard

(56) Entgegenhaltungen:
- US-A1- 2006 136 095
- US-A1- 2012 191 243
- US-A1- 2016 136 052
- US-A1- 2016 326 573

## Beschreibung

### Anwendungsgebiet der Erfindung

Die Erfindung betrifft den konstruktiven Aufbau eines Containments für die automatisierte Produktion pharmazeutischer oder biotechnischer Artikel, die als Endprodukt jeweils mehrere Artikelteile umfassen. Das Containment ist typischerweise ausgebildet als offenes oder geschlossenes Barriere-System mit beschränktem Eingriff (RABS = Restricted Access Barrier System) oder als Isolator, jeweils mit einer Luftbehandlungsvorrichtung ausgestattet und durch eine Reinraumklassifikation qualifiziert. Das Containment ist von einem Gehäuse umgeben, in dem sich eine innere Kammer mit zumindest einem Durchlass befindet. Weitere gattungsmässige Merkmale des Aufbaus sind, dass in der Kammer zumindest ein Roboter installiert ist, der an seinem schwenkbaren Arm zumindest ein Manipulierorgan besitzt, welches innerhalb eines Schwenkbereichs verfahrbar ist, wobei die Kammer zur Installation zumindest einer Prozesseinheit zur Produktion der Artikel geeignet ist. Mehrere derartige Containments können in einer Produktionslinie miteinander zu einer Containment-Strasse verkettet sein.

### Stand der Technik

Die bisher bekannten Containments für die automatisierte Produktion pharmazeutischer oder biotechnischer Artikel beruhen darauf, dass in den Containments Wasch-, Füll- und Verschlussstationen installiert sind und sich durch die Containments Transportbänder und dazwischen angeordnete Karussellförderer erstrecken, mittels denen die zu verarbeitenden Artikelteile der jeweiligen Maschinenstation zugeführt werden. Hierzu bekannt sind beispielsweise von der Firma Bosch: "Universal washing machines RRN/RRU", "FLC - filling and closing machine for vials and infusion bottles", "Closing machine for overseal caps VRU/VRT/VRK", "Drying and Sterilizing Unnel HQL Series" und "FXS - Filling and sealing machine for presterilized syringes"

Das Dokument US 2016/0326573 A1 offenbart auch ein Containment für die automatisierte Produktion pharmazeutischer oder biotechnischer Artikel.

### Aufgabe der Erfindung

Der Erfindung liegt die Aufgabe zugrunde, einen konstruktiven Aufbau eines Containments für die automatisierte Produktion pharmazeutischer oder biotechnischer Artikel vorzuschlagen, bei dem in der Arbeitskammer das Entstehen unerwünschter Partikel - z.B. durch Abrieb an Behältnissen und/oder Transportmitteln - verringert ist. Zugleich soll durch das konstruktive Konzept die durch die Arbeitskammer geführte laminare Luftströmung weniger von installierten Aufbauten gestört werden. Diese Aufgaben münden im Ziel zur Verringerung der Fehlerquote nicht vorschriftsgemäss behandelter Artikel. Schliesslich ist es Aufgabe des zu schaffenden Aufbaukonzepts, Anpassungen an die jeweiligen speziellen Produktionsanforderungen effizient baukastenartig, auch für verkettete Containment-Strassen, zu erfüllen.

### Übersicht über die Erfindung

Der konstruktive Aufbau eines Containments ist zur automatisierten Produktion pharmazeutischer oder biotechnischer Artikel bestimmt. Als Endprodukt umfasst ein Artikel jeweils mehrere Artikelteile. Das Containment ist von einem Gehäuse umgeben, innerhalb dessen sich eine innere Kammer mit zumindest einem Durchlass befindet. In der Kammer ist zumindest ein Roboter installiert, der an seinem schwenkbaren Arm zumindest ein Manipulierorgan besitzt, welches innerhalb eines Schwenkbereichs verfahrbar ist. Die Kammer ist zur Installation zumindest einer Prozesseinheit zur Produktion der Artikel geeignet.

Zur obigen, den Gattungsbegriff bildenden Merkmalskette weist der konstruktive Aufbau folgende zusätzliche Merkmale auf. Die Kammer umfasst einen Prozessraum zur Produktion der Artikel und einen wannenförmigen Basisraum zur Verankerung des Fusses des zumindest einen Roboters an einer der Seitenflächen innerlich des Basisraums. Der Prozessraum ist oberhalb des Basisraums angeordnet, und beide grenzen kongruent offen zueinander an. Das Manipulierorgan hat die Funktionen als Greifer und Transportmittel für die Artikel oder Artikelteile und/oder zur Inspektion der Artikel oder Artikelteile und/oder zur Produktion der Artikel. Der Schwenkbereich des zumindest einen Manipulierorgans an dem zumindest einen Roboter erstreckt sich in horizontaler und in vertikaler Ebene innerhalb eines Arbeitsbereichs, der sich zwischen einer minimalen Arbeitshöhe und einer maximalen Arbeitshöhe definiert.

Nachfolgend werden spezielle Ausführungsformen der Erfindung definiert: Innerhalb des Schwenkbereichs ist zumindest ein Übergabebereich vorgesehen, dazu bestimmt, mittels des Manipulierorgans des zumindest einen Roboters Artikel oder Artikelteile aufzunehmen oder zu positionieren.

Vorteilhaft sind alternativ innerhalb des Schwenkbereichs zwei Übergabebereiche vorgesehen. Hierbei ist der erste Übergabebereich dazu bestimmt, mittels des Manipulierorgans des zumindest einen Roboters Artikel oder Artikelteile aufzunehmen, und der zweite Übergabebereich ist dazu bestimmt, mittels des Manipulierorgans des zumindest einen Roboters Artikel oder Artikelteile zu positionieren.

Ein erstes Containment ist mit einem zweiten Containment verbunden, in denen jeweils ein Roboter installiert ist, und einer der Übergabebereiche liegt im Schwenkbereich der Manipulierorgane beider Roboter.

Vorteilhaft sind alternativ im Containment zumindest zwei Roboter installiert, wobei jeweils ein Übergabebereich im Schwenkbereich der Manipulierorgane zweier benachbarter Roboter liegt.

Im Prozessraum des Containments ist im Schwenkbereich des Manipulierorgans des zumindest einen Roboters zumindest eine Prozesseinheit zur Produktion der Artikel installiert. Die Prozesseinheit ist als Waschstation, Trocknungsstation, Sterilisationsstation, Füllstation, Verschlussstation, Montage- oder Demontagestation, Kennzeichnungsstation oder Prüfstation ausgebildet. Die Prüfstation ist zur optischen Inspektion und/oder Gewichtskontrolle beschaffen. Im Prozessraum sind mehrere Prozesseinheiten verschiedener Funktionen installierbar.

Zur Bildung eines Baukastensystem von Containments ist ein vordefiniertes Positionsraster für die Verankerung des Fusses des zumindest einen Roboters an den Seitenflächen innerlich des Basisraums des jeweiligen Containments vorgesehen.

Der Basisraum ist von einer geneigten Bodenfläche begrenzt, welche die Abfuhr einer die Kammer durchfliessenden Luftströmung - vorzugsweise laminarer Charakteristik - und im Prozessraum bei der Produktion der Artikel anfallender Flüssigkeiten begünstigt.

Im Prozessraum sind ferner zumindest eine Transferstation zur Zwischenpositionierung von Artikelteilen und/oder Artikeln und/oder zumindest ein Speicher zur Bevorratung von Artikelteilen angeordnet.

Die Manipulierorgane weisen ein Aufnahmeraster zur Aufnahme von einer gruppierten Anzahl von Artikelteilen oder Artikeln auf. Dem Speicher kann ein Magazin zur Auffüllung eines Manipulierorgans gemäss dessen Aufnahmeraster mit einer gruppierten Anzahl von Artikelteilen zugeordnet sein. Ein jeweiliges Aufnahmeraster der Prozesseinheiten und Transferstation ist zum gleichzeitigen Handling einer gruppierten Anzahl von Artikelteilen oder Artikeln zahlenmässig und geometrisch komplementär zum Aufnahmeraster der Manipulierorgane ausgebildet. Das Manipulierorgan kann zusätzlich mit einer Montage- oder Demontagevorrichtung, einer Inspektionsvorrichtung und/oder einer Verschlussvorrichtung und/oder einer Kennzeichnungsvorrichtung ausgestattet sein.

In eine der den Prozessraum abgrenzenden Gehäuseflächen ist ein austauschbares Wechselmodul einsetzbar, welches mit funktionsspezifischen Prozesseinheiten bestückt ist. Das Wechselmodul kann zusätzlich zu den Prozesseinheiten eine Schleusenvorrichtung zum Ein- und/oder Ausschleusen von Artikelteilen oder Artikeln aufweisen. Funktionsmässig gleichartige Prozesseinheiten können in zueinander versetzten Kaskaden angeordnet sein.

Ein erstes Containment ist mit weiteren Containments in einer Produktionslinie miteinander zu einer Containment-Strasse verkettet. Der jeweilige Basisraum und der jeweilige Prozessraum können eine jeweils aufgabenspezifische Bestückung mit Robotern, Manipulierorganen und/oder Prozesseinheiten und/oder Transferstationen und/oder Speichern besitzen. Der Schwenkbereich des zumindest einen Manipulierorgans an dem zumindest einen Roboter erstreckt sich in horizontaler Ebene zumindest bis über eine der vertikalen Flächen des Prozessraums hinaus.

Innerhalb einer Containment-Strasse hat das erste Containment einen ersten Durchlass für das Anliefern von Artikelteilen in Gestalt von in einem Tray systematisch gemäss einem Sortierraster eingestellten Behältnissen zum Prozessraum. Somit lässt sich eine gruppierte Anzahl der Behältnisse vom Manipulierorgan des ersten Roboters ergreifen und ist an die erste Prozesseinheit zur Durchführung des ersten Produktionsschritts heranführbar. Das erste Containment hat einen zweiten Durchlass oder ist zu einem nächsten Containment offen, zwecks Überführung der insoweit bearbeiteten Artikelteile in den Prozessraum des nächsten Containments zur Durchführung nächster Produktionsschritte mittels weiterer Roboter und weiterer Prozesseinheiten. Das letzte Containment der Containment-Strasse mit den darin installierten letzten Robotern und letzten Prozesseinheiten ist zur Durchführung abschliessender Produktionsschritte bestimmt. Dieses letzte Containment besitzt einen zweiten Durchlass, durch den sich die fertig produzierten Artikel ausliefern lassen.

Das Aufnahmeraster der Manipulierorgane ist mittels einer Stellmechanik verstellbar ausgebildet, um bei zunächst vorhandener Abweichung des Sortierrasters zu den Aufnahmerastern der Prozesseinheiten und Transferstation Kompatibilität herzustellen.

Der fertig produzierte Artikel umfasst als Artikelteile:
- ein Behältnis;
- eine in das Behältnis durch dessen Einfüllöffnung applizierte pharmazeutische oder biotechnische Füllung als Flüssigkeit oder Pulver;
- einen ersten Verschluss in Gestalt eines Stopfens oder eines thermisch erzeugten Verschlusses; und
- einen optionalen zweiten Verschluss in Gestalt eines den ersten Verschluss formschlüssig übergreifenden Elements, z.B. eine Bördelkappe, als Sicherung für den ersten Verschluss.

Eine Prozesseinheit hat die Gestalt einer Wägestation, welche sich ausserhalb der Kammer oder direkt ausserhalb des Containments auf einem Fundament abstützt und somit gegen Erschütterungen isoliert ist.

Die Wägestation hat ein Wägetablett mit einem zu den übrigen Aufnahmerastern kompatiblen Aufnahmeraster, das bestimmt ist:
- zum Einsetzen einer vom Manipulierorgan abgesetzten gruppierten Anzahl von mit der Füllung versehenen Behältnissen; und
- zur individuellen Gewichtsmessung jedes einzelnen der befüllten Behältnisse.

Zwecks Befüllung des Magazins ist der Speicher mit einer Vibrationsvorrichtung versehen und ist zur Vermeidung störender Vibrationen ausserhalb der Kammer abgestützt.

Durch das einzelne Containment und die Containment-Strasse erstreckt sich ein Tunnel, der dazu dient, die am ersten Durchlass von Behältnissen geleerten Trays bei Umgehung der Kammer am zweiten Durchlass zur Aufnahme der fertig produzierten Artikel wieder bereitzustellen und nach Leerung an den ersten Durchlass zurückzuführen.

Das Containment ist ausgebildet als:
- offenes oder geschlossenes Barriere-System mit beschränktem Eingriff (RABS = Restricted Access Barrier System) mit einer Luftbehandlungsvorrichtung mit Reinraumklassifikation; oder
- Isolator mit einer Luftbehandlungsvorrichtung mit Reinraumklassifikation und Dekontaminationsvorrichtung.

Die Luftbehandlungsvorrichtung hat einen Zuluftfilter, der oberhalb des Prozessraums angeordnet ist, und weist einen Abluftfilter auf, welcher in einer am Basisraum vorhandenen Aufnahme installiert ist.

### Kurzbeschreibung der beigefügten Zeichnungen

Es zeigen:
- Figur 1A -: Ein Containment, beispielhaft in Gestalt eines Isolators, nur als Gehäuse, im Vertikalschnitt als Seitenansicht;
- Figur 1B -: das Containment gemäss Figur 1A, ausgestattet mit Robotern, Prozesseinheiten, einem Wechselmodul, einer Schleusenvorrichtung, Durchlässen und in einem Tray bereitgestellten Behältnissen, in frontaler Perspektivansicht;
- Figur 1C -: die Anordnung gemäss Figur 1B, in Frontansicht;
- Figur 1D -: den Vertikalschnitt auf der Linie A-A in Figur 1C;
- Figur 1E -: den Vertikalschnitt auf der Linie B-B in Figur 1D;
- Figur 2A -: die Anordnung gemäss Figur 1B, ohne Schleusenvorrichtung, mit beiden Robotern im Arbeitsmodus (Waschen und Trocknen), in frontaler Perspektivansicht;
- Figur 2B -: die Anordnung gemäss Figur 2A, in Frontansicht;
- Figur 2C -: den Vertikalschnitt auf der Linie C-C in Figur 2B;
- Figur 2D -: den Vertikalschnitt auf der Linie D-D in Figur 2C;
- Figur 3A -: einen kompletten Artikel, in Frontansicht;
- Figur 3B -: den Vertikalschnitt auf der Linie E-E in Figur 3A;
- Figur 3C -: den kompletten Artikel gemäss Figur 3A, in perspektiver Explosivansicht;
- Figur 3D -: den Vertikalschnitt auf der Linie F-F in Figur 3C;

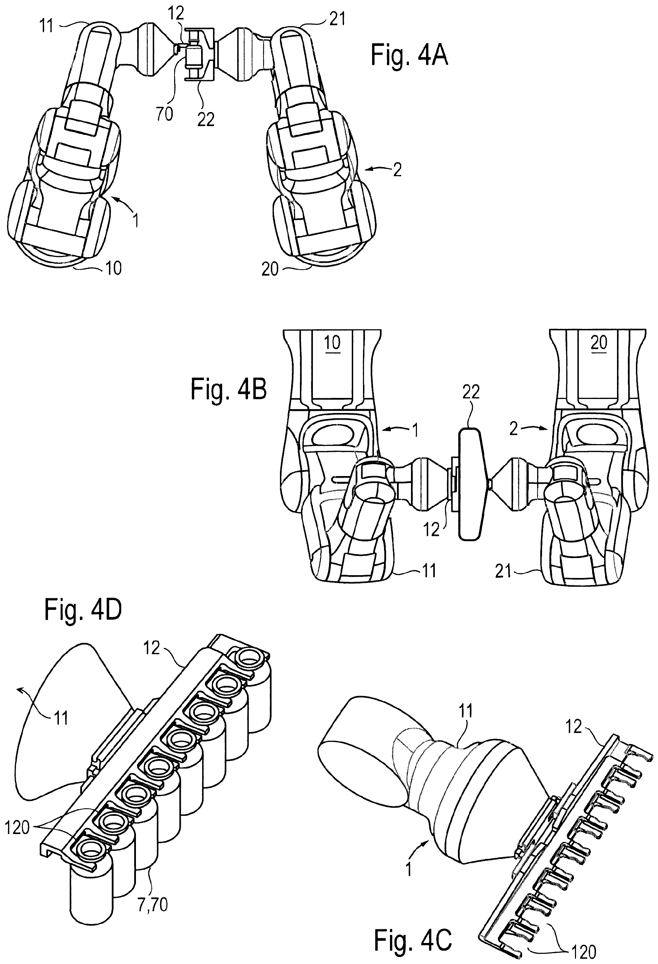

- Figur 4A -: das Zusammenwirken von zwei Robotern bei der Übergabe/Übernahme von Artikeln bzw. Artikelteilen, als perspektivische Prinzipansicht;
- Figur 4B -: den Aufbau gemäss Figur 4A, in perspektiver Draufsicht;
- Figur 4C -: den ersten Roboter aus Figur 4A, in Perspektivansicht auf das Manipulierorgan;
- Figur 4D -: das Manipulierorgan des ersten Roboters aus Figur 4A mit an den Hälsen ergriffenen Behältnissen, in Gestalt von Vials, in vergrösserter Perspektivansicht;

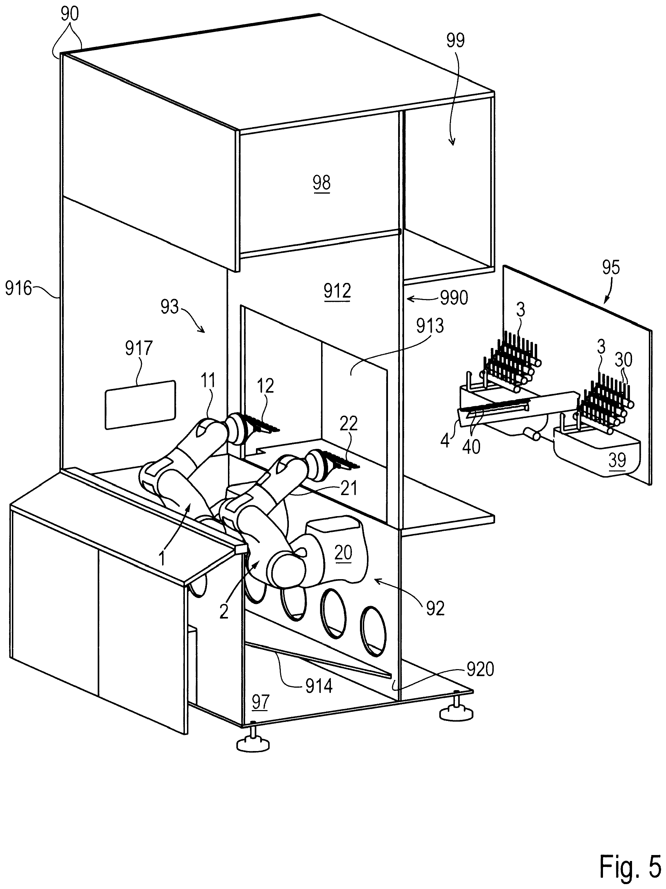

- Figur 5 -: den Aufbau gemäss Figur 2A, mit angenähertem Wechselmodul, in Perspektivansicht;

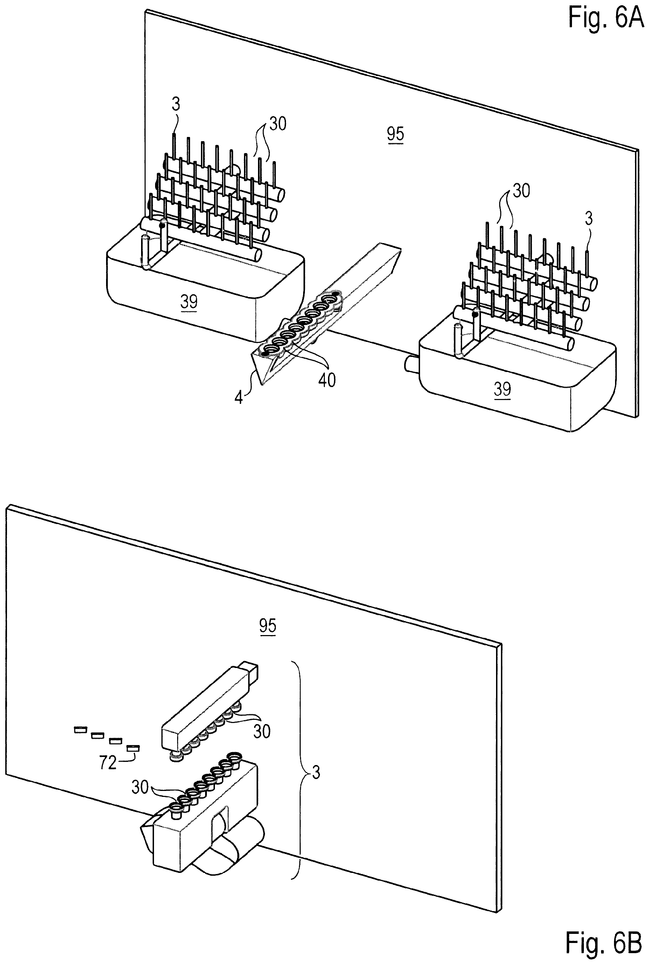

- Figur 6A -: das Wechselmodul gemäss Figur 5, in vergrösserter Perspektivansicht;
- Figur 6B -: ein alternatives Wechselmodul mit einer Prozesseinheit in Gestalt einer Kappungsvorrichtung zum Aufbringen der Zweitverschlüsse, in Perspektivansicht;

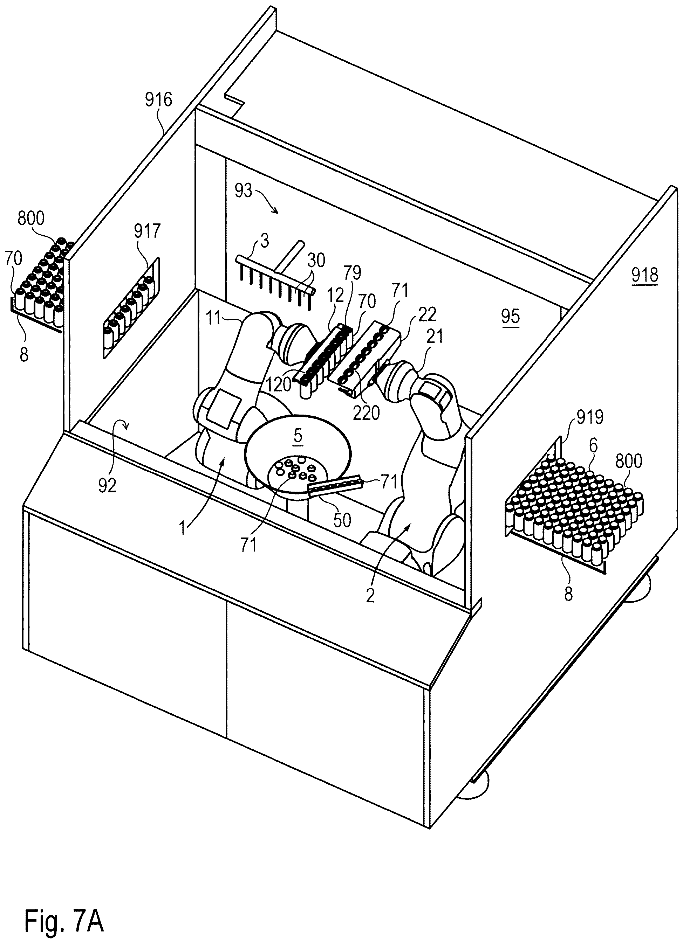

- Figur 7A -: das Containment gemäss Figur 1A, ausgestattet mit zwei Robotern im Arbeitsmodus (Füllen und Zustopfen), einer Prozesseinheit, einem Teilemagazin mit ersten Verschlüssen, am ersten Durchlass im Tray bereitgestellten Behältnissen, am zweiten Durchlass ein Tray mit verschlossenen Behältnissen, in perspektivischer Draufsicht;

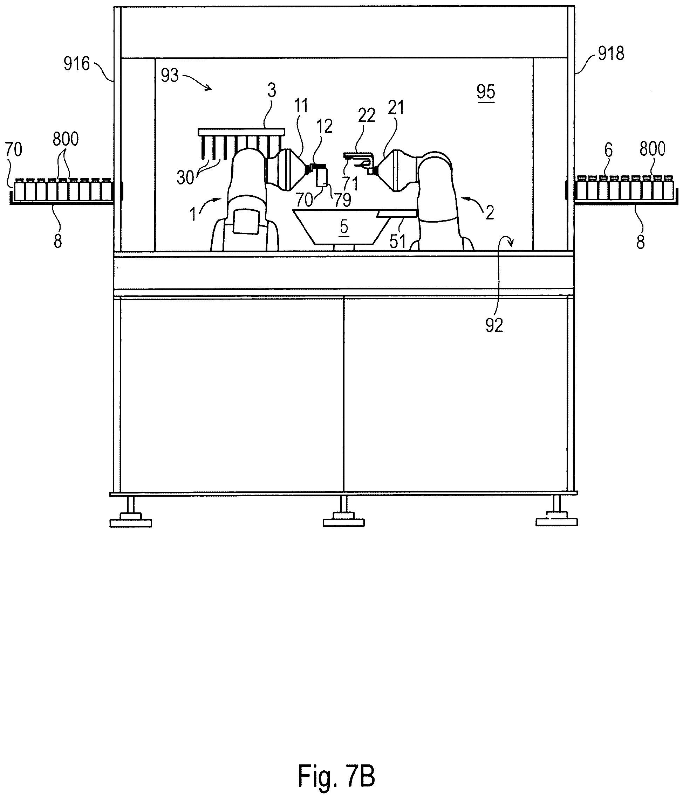

- Figur 7B -: den Aufbau gemäss Figur 7A, in Frontansicht;

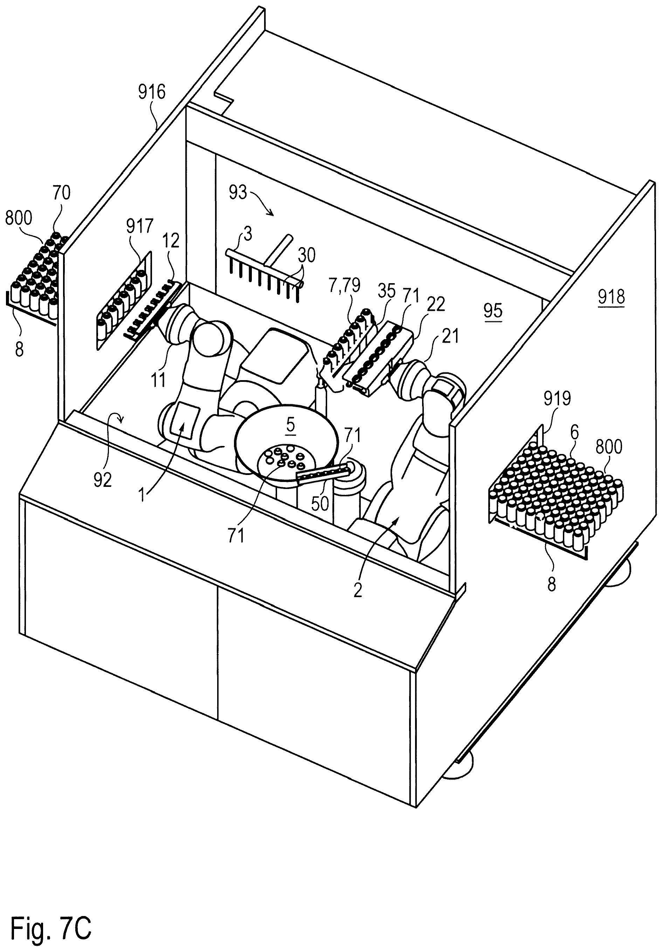

- Figur 7C -: die Anordnung gemäss Figur 7A, komplettiert mit einer Wägestation, beide Roboter im Arbeitsmodus (Füllen, Wägen und Zustopfen), , in perspektivischer Draufsicht;

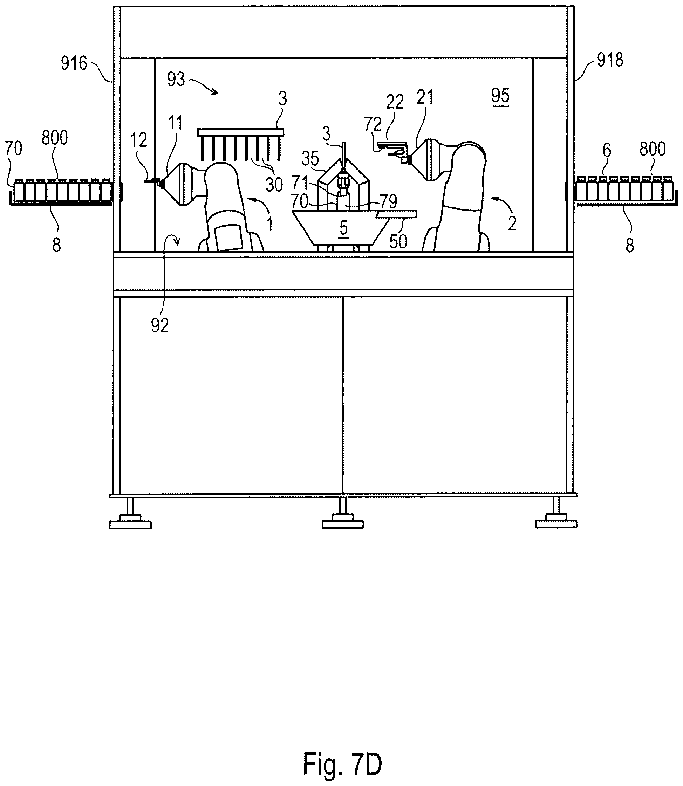

- Figur 7D -: den Aufbau gemäss Figur 7D, in Frontansicht;
- Figur 7E -: die Wägestation aus Figur 7D, in Perspektivansicht; und
- Figur 8 -: eine Containment-Strasse, mit fünf miteinander verketteten Containments zur Durchführung verschiedener Produktionstakte.

### Ausführunqsbeispiel

Mit Bezug auf die beiliegenden Zeichnungen erfolgt nachstehend die detaillierte Beschreibung des erfindungsgemässen konstruktiven Aufbaus eines Containments, welches zur automatisierten Produktion pharmazeutischer oder biotechnischer Artikel bestimmt ist.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen. Im Interesse der Übersichtlichkeit wird auf die wiederholte Bezeichnung von Bauteilen in nachfolgenden Figuren zumeist verzichtet, sofern zeichnerisch eindeutig erkennbar ist, dass es sich um "wiederkehrende" Bauteile handelt.

### Figur 1A

Das Containment **9,** hier in Gestalt eines Isolators, ist zunächst nur im weitgehend leeren Aufbau mit dem Gehäuse **90** zwecks Erläuterung der Raumaufteilung und Wandungen dargestellt. In der Frontwand **910** sitzt üblicherweise eine durchsichtige Scheibe **911,** während in die Rückwand **912** ein Wechselmodul **95** eingesetzt ist. Das Gehäuse **90** umfasst ferner eine obere und eine untere Wandung, welche zusammen mit der Front- und Rückwand **910,912** das Containment **9** nach aussen abgrenzen. Innerhalb des Containments **9** befindet sich die innere Kammer **91,** welche sich in einen Prozessraum **93** und einen darunter liegenden wannenförmigen Basisraum **92** strukturiert, der unten an einer schrägen Bodenfläche **914** endet, unterhalb der sich der Bodenraum **97** befindet. Prozessraum **93** und Basisraum **92** grenzen beide kongruent offen zueinander an. Die Bodenfläche **914** hat an ihrer tiefsten Stelle eine Entwässerungsöffnung **920**, zu der benachbart in die Rückwand **912** ein Abluftfilter **940** eingesetzt ist, welcher in den Rückraum **99** ragt. Durch den Rückraum **99** erstreckt sich der Tunnel **990.** Innerhalb des Prozessraums **93** erstreckt sich ein vertikaler Arbeitsbereich **a,** der sich zwischen einer minimalen Arbeitshöhe **aₘᵢₙ** und einer maximalen Arbeitshöhe **aₘₐₓ** definiert. Kammer **91** und Prozessraum **93** schliessen oben an einer Deckfläche **915** ab, auf der ein in den Dachraum **98** ragender Zuluftfilter **94** installiert ist. Im Betrieb des Containments **9** wird durch den Zuluftfilter **94** eine typische laminare Luftströmung **L** oben in die Kammer **91** eingebracht, welche unten aus der Kammer **91** über den Abluftfilter **940** abströmt.

### Figuren 1B bis 1E

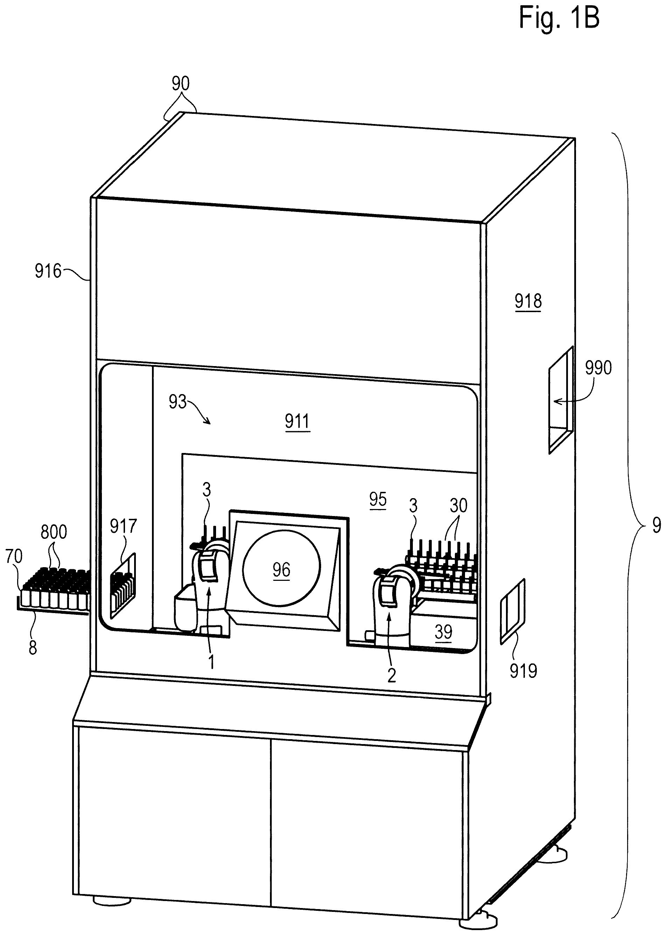

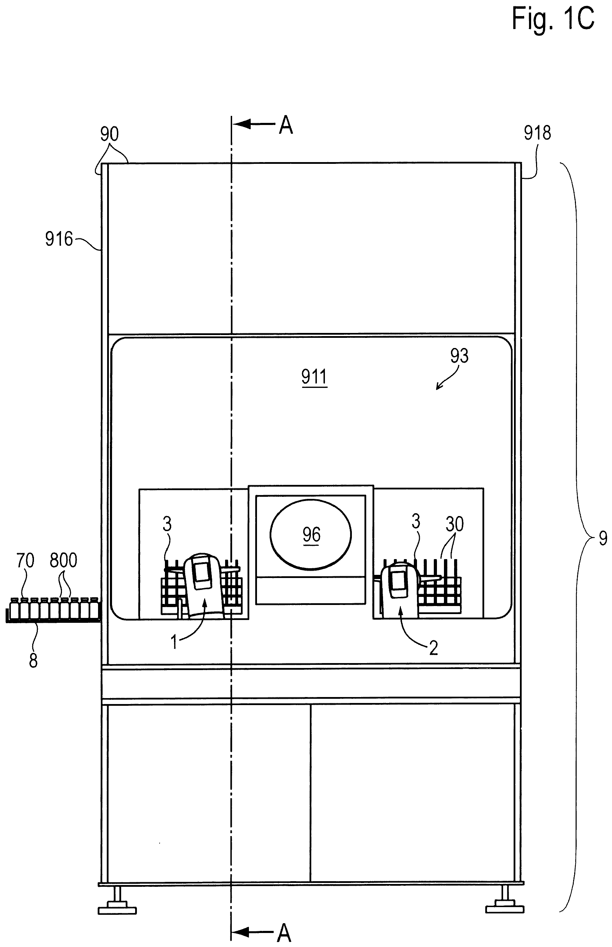

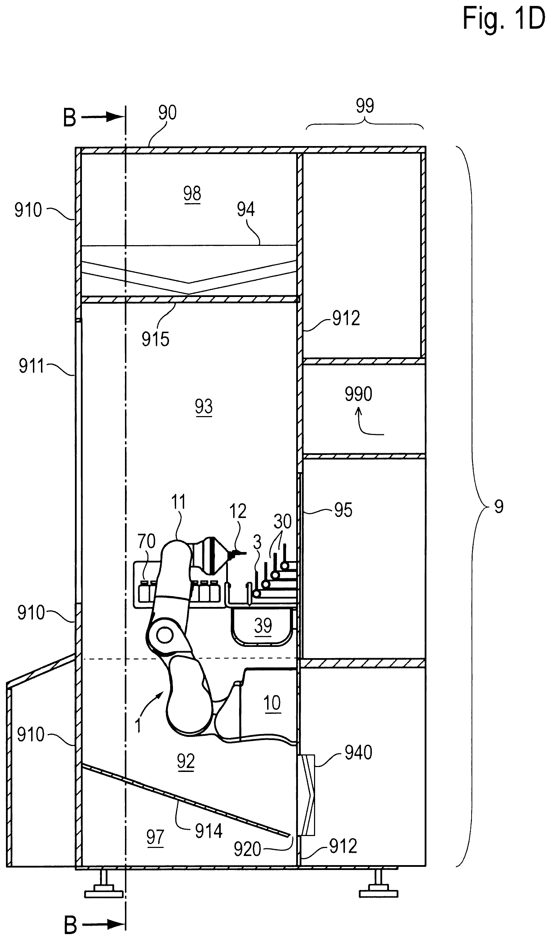

Diese Figurenfolge illustriert das Containment **9,** ausgestattet mit zwei Robotern **1,2,** zwei Prozesseinheiten **3,** einem Wechselmodul **95,** einer Schleusenvorrichtung **96** und dem eingangsseitigen Durchlass **917** sowie dem ausgangsseitigen Durchlass **919.** An den eingangsseitigen Durchlass **917** sind in einem Tray **8** gemäss einem Sortierraster **800** bereitgestellte Behältnisse **70** herangeführt. Am ausgangsseitigen Durchlass **919** steht momentan noch nichts an. Auf der zum Prozessraum **93** gewandten Seite des Wechselmoduls **95** sind die Prozesseinheiten **3** installiert, z.B. kaskadenförming, und in einem Aufnahmeraster **30** arrangierte Wasch- und Trocknungsdüsen. Unterhalb der Prozesseinheiten **3** sind Auffangbecken **39** zum Sammeln von Waschflüssigkeit angeordnet. In einer Ausstattung befindet sich zwischen den beiden Prozesseinheiten **3** die in das Wechselmodul **95** integrierte Schleusenvorrichtung **96** (s. Figuren 1B, 1C).

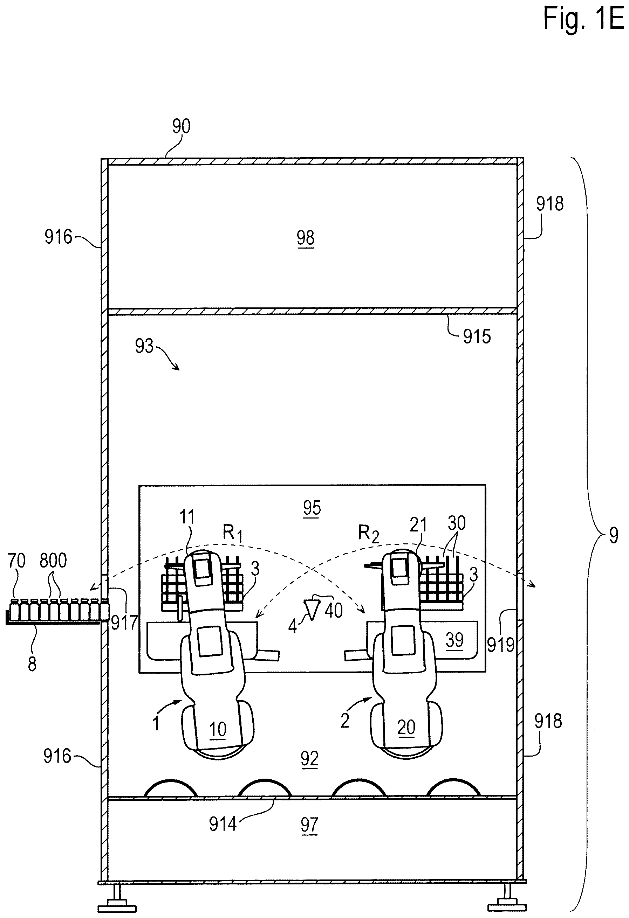

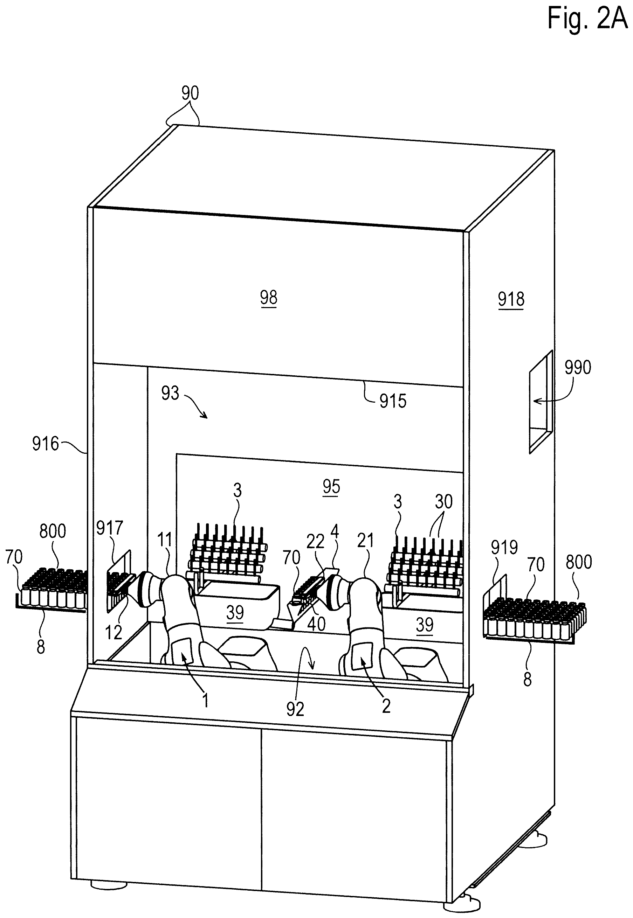

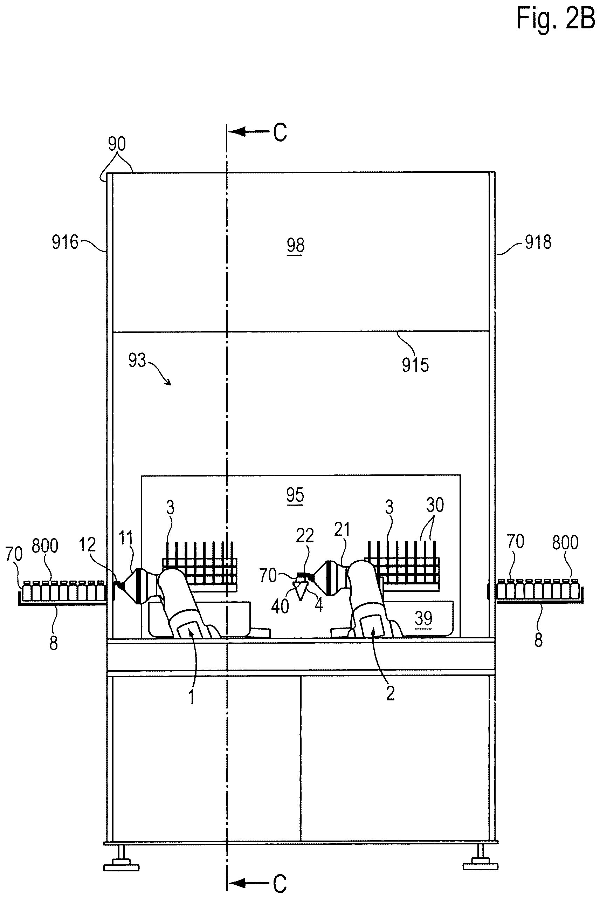

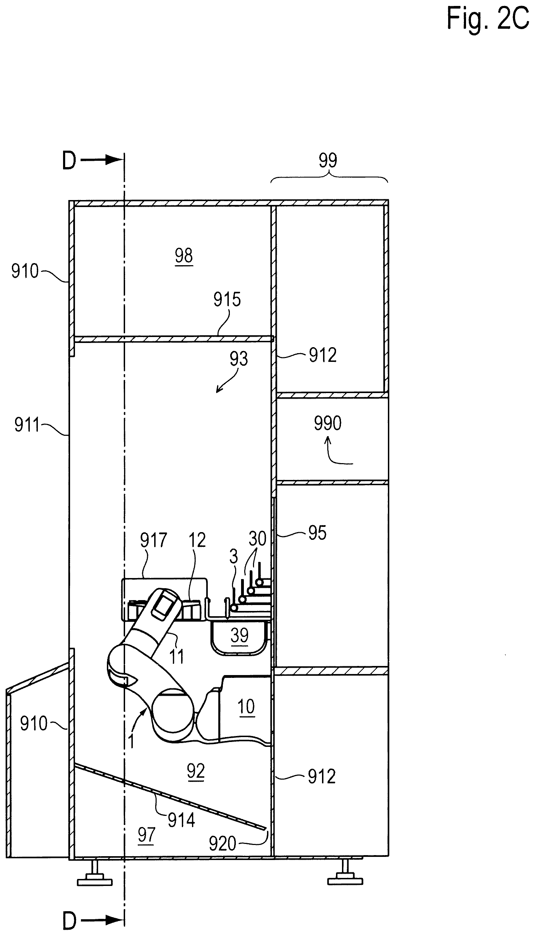

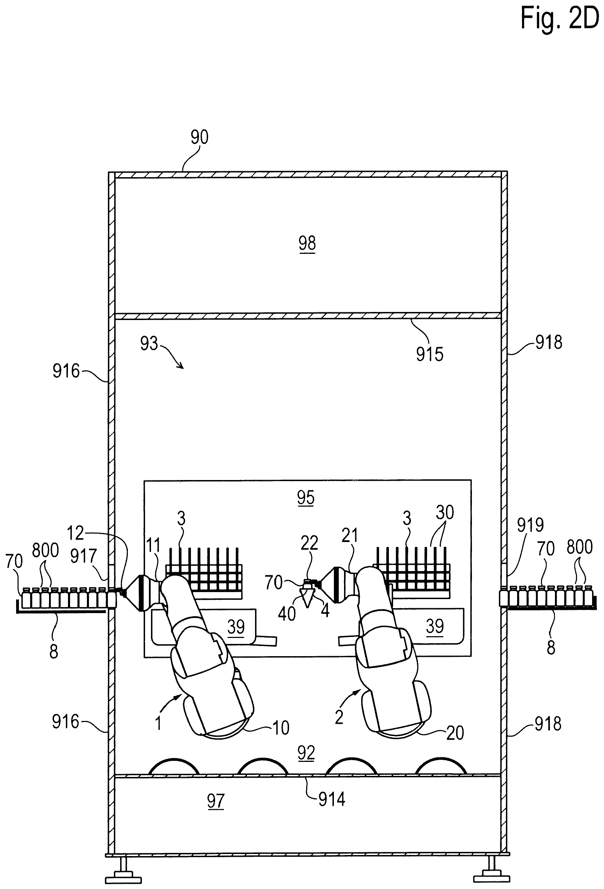

Die Füsse **10,20** der Roboter **1,2** sind an der Rückwand **912** im Basisraum **92** verankert, die Roboterarme **11,21** mit den zuvorderst angeordneten Manipulierorganen **12,22** (s. auch Figur 2C,2D) ragen aufwärts in den Prozessraum **93.** Zur Bildung eines Baukastensystems von Containments. **9** ist ein vordefiniertes Positionsraster für die Verankerung der Füsse **10,20** der Roboter **1,2** an den Seitenflächen **910,912,916,918** innerlich des Basisraums **92** des jeweiligen Containments **9** vorgesehen. Das Manipulierorgan **12,22** hat die Funktion als Greifer und Transportmittel für die Artikel 6 oder Artikelteile **7;70-72** und/oder zur Inspektion der Artikel **6** oder Artikelteile **7;70-72** und/oder für die Produktion der Artikel **6** (s. auch Figur 2A). Auch neben der reinen Greifer- bzw. Haltefunktion könnten die Manipulierorgane **12,22** zusätzlich mit einer Montage- oder Demontagevorrichtung, einer Inspektionsvorrichtung und/oder einer Verschlussvorrichtung und/oder einer Kennzeichnungsvorrichtung ausgestattet sein. Zusätzlich oder alternativ zur Schleusenvorrichtung **96** kann das Wechselmodul **95** eine Transferstation **4** stützen, welche das Aufnahmeraster **40** hat (s. Figur 1E).

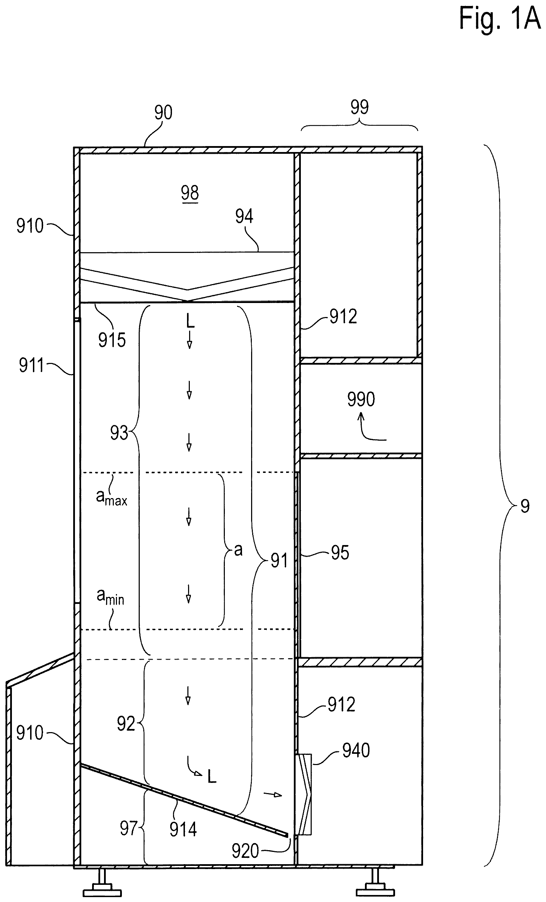

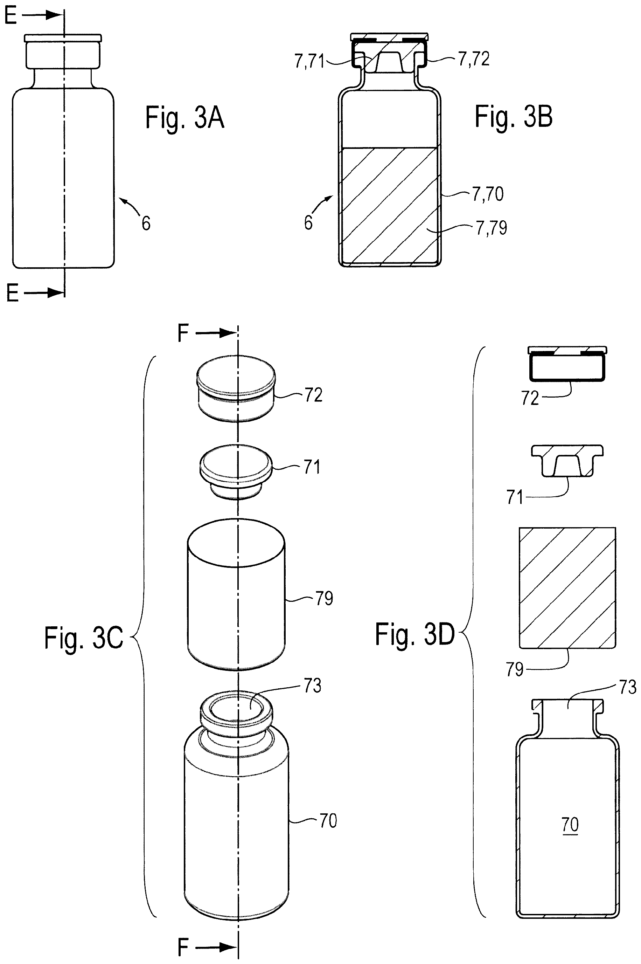

Der Schwenkbereich **R₁,R₂** der Manipulierorgane **12,22** an den Robotern **1,2** erstreckt sich in horizontaler und vertikaler Ebene, nämlich in vertikaler Ebene innerhalb eines Arbeitsbereichs **a** mit der minimalen und der maximalen Arbeitshöhe **amin, aₘₐₓ** (s. Figur 1A). In der horizontalen Ebene ist der Schwenkbereich **R₁,R₂** vorzugsweise über die Seitenflächen **916,918** hinausreichend bemessen, um auf die im Tray **8** am eingangsseitigen Durchlass **917** systematisch im Sortierraster **800** stehenden Behältnisse **70** zugreifen zu können bzw. nach deren Behandlung im ausgangsseitigen Durchlass **919** zu positionieren. Innerhalb des Schwenkbereichs **R₁,R₂** ist zumindest ein Übergabebereich vorgesehen, dazu bestimmt, mittels des Manipulierorgans **12,22** zumindest eines Roboters **1,2** Artikel **6** oder Artikelteile **7;70-72** aufzunehmen oder zu positionieren. In weiterer Ausgestaltung sind innerhalb des Schwenkbereichs **R₁,R₂** zwei Übergabebereiche vorgesehen. Hierbei ist der erste Übergabebereich dazu bestimmt, mittels des Manipulierorgans **12,22** zumindest eines Roboters **1,2** Artikel **6** oder Artikelteile **7;70-72** aufzunehmen. Hingegen wäre der zweite Übergabebereich dazu vorgesehen, mittels des Manipulierorgans **12,22** zumindest eines Roboters **1,2** Artikel **6** oder Artikelteile **7;70-72** zu positionieren (s. auch Figuren 2A,3A-3C).

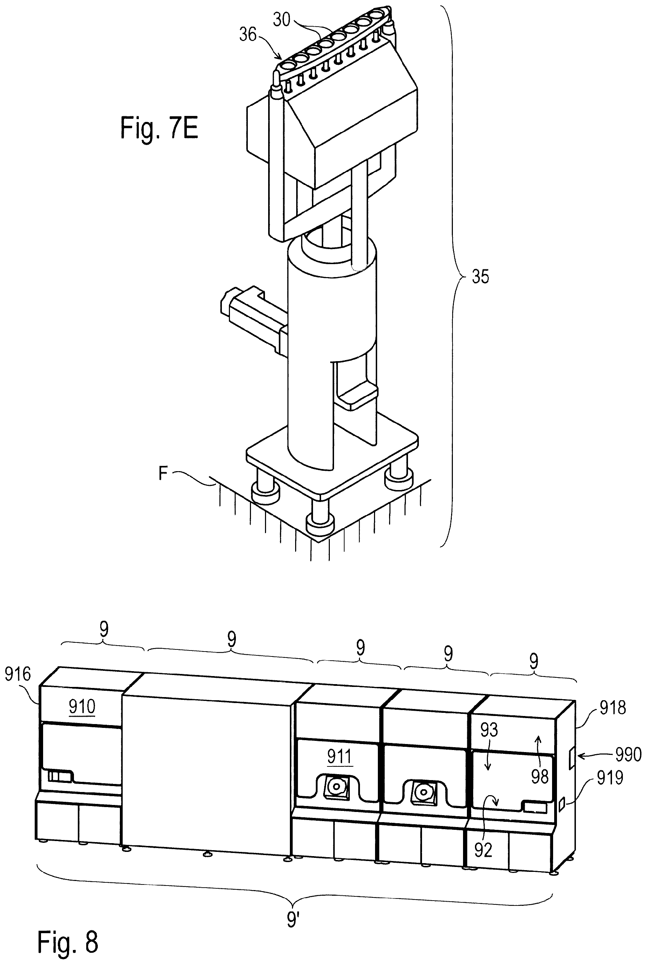

Durch das einzelne Containment **9** und die Containment-Strasse **9'** erstreckt sich der Tunnel **990,** welcher dazu dient, die am eingangsseitigen Durchlass **917** von Behältnissen **70** geleerten Trays **8** bei Umgehung der Kammer **91** am ausgangsseitigen Durchlass **919 zur** Aufnahme der fertig produzierten Artikel **6** bereitzustehen und in umgekehrter Richtung nach Leerung an den eingangsseitigen Durchlass **917** zurückzuführen (s. auch Figur 8).

### Figuren 2A bis 2D

Diese Figurenfolge illustriert das Containment **9** mit beiden Robotern **1,2** im Arbeitsmodus. Vom ersten Roboter **1** schwenkt dessen Arm **11** hin zum eingangsseitigen Durchlass **917,** um vom dort stehenden Tray **8,** welches mit den Behältnissen **70** im Sortierraster **800** beladen ist, mittels des zugehörigen Manipulierorgans **12** eine zu dessen Aufnahmeraster **120** komplementäre gruppierte Anzahl von leeren und offenen Behältnissen **70** auszunehmen - z.B. die vorderste Zeile der Behältnisse **70** - und der benachbarten Prozesseinheit **3** zuzuführen. Diese Prozesseinheit **3** könnte eine erste Waschstation sein. In einem Zwischenschritt hatte der erste Roboter **1** die zuvor an der ersten Waschstation gereinigte Gruppe von Behältnissen **70** auf der Transferstation **4** in deren Aufnahmeraster **40** eingesetzt. Die auf der Transferstation **4** - als Übergabebereich - stehende Gruppe wird vom Manipulierorgan **22** des zweiten Roboters **2** erfasst und zunächst der seinerseits zugehörigen Prozesseinheit **3,** welche eine zweite Waschstation sein könnte, zugeführt. Nach dem zweiten Reinigungsgang transportiert der zweite Roboter **2** die nun zweifach gereinigte Gruppe von Behältnissen **70** auf das am ausgangsseitigen Durchlass **919** stehende Tray **8** im Sortierraster **800** zur weiteren Bearbeitung, üblicherweise innerhalb einer zu einer Produktionslinie miteinander zu einer Containment-Strasse **9'** verketteten Mehrzahl von Containments **9.**

### Figuren 3A bis 3D

Ein fertig produzierter Artikel **6** umfasst als Artikelteile **7** zunächst ein Behältnis **70,** hier in Gestalt eines typischen Vials, das eine Einfüllöffnung **73** besitzt, um durch diese eine pharmazeutische oder biotechnische Füllung **79** als Flüssigkeit oder Pulver in das Behältnis **70** einzubringen. Ferner gehört zum kompletten Artikel **6** ein erster Verschluss **71,** hier in Gestalt eines Stopfens. Auch thermisch liesse sich ein Verschluss erzeugen. Schliesslich kann zum vollständigen Artikel **6** ein optionaler zweiter Verschluss **72** gehören, nämlich in Gestalt eines den ersten Verschluss **71** formschlüssig übergreifenden Elements, z.B. eine Bördelkappe, als Sicherung für den ersten Verschluss **71.**

### Figuren 4A bis 4D

Diese Figurenfolge illustriert das Zusammenwirken von zwei Robotern **1,2** und deren Manipulierorganen **12,22** des bei der Übergabe/Übernahme am Beispiel einer gruppierten Anzahl von Behältnissen **70,** die an einem im Raum schwebenden Übergabebereich vom Manipulierorgan **12** des ersten Roboters **1** herangeliefert und noch gehalten, nun vom Manipulierorgan **22** des zweiten Roboters **2** zur Übernahme ergriffen werden. Beispielhaft wird vom ersten Roboter **1** mit dessen Manipulierorgan **12** gemäss Aufnahmeraster **120** eine Gruppe von Behältnissen **70** an deren Vialhälsen hängend gehalten. Für die Übernahme erfasst vom zweiten Roboter **2** dessen Manipulierorgan **222** gemäss Aufnahmeraster **220** die Gruppe von Behältnissen **70** zangenartig zwischen deren Böden und oberen Enden. So ergriffen wird die Gruppe von Behältnissen **70** dann durch Bewegung des Arms **21** des zweiten Roboters **2** aus dem Aufnahmeraster **120** vom Manipulierorgan **12** des ersten Roboters **1** quasi herausgehoben und weiter transportiert.

Das Sortierraster **800** in den Trays **8,** das Aufnahmeraster **30** der Prozesseinheiten **3** und das Aufnahmeraster **40** der Transferstation **4** sind nicht von vornherein stets zu den Aufnahmerastern **120,220** der Manipulierorgane **12,22** kompatibel. Zwecks Herstellung der Kompatibilität sind die Aufnahmeraster **120,220** der Manipulierorgane **12,22** mittels einer Stellmechanik verstellbar ausgebildet.

### Figuren 5 und 6A

In eine der den Prozessraum **93** abgrenzenden Gehäuseflächen **910,912,9,16,918** - hier vorzugsweise in eine Aussparung **913** der Rückwand **912** - ist ein austauschbares Wechselmodul **95** einsetzbar. Im gezeigten Beispiel sind nebeneinander zwei kaskadenförmige Prozesseinheiten **3** mit deren Aufnahmeraster **30** vorgesehen. Darunter ist jeweils ein Auffangbecken **39** zugeordnet. Beide Prozesseinheiten **3** könnten Waschstationen sein, die rechte könnte auch als Trocknungsstation ausgebildet sein. Zwischen den beiden Prozesseinheiten **3** ist eine Transferstation **4** mit dem Aufnahmeraster **40** installiert. Diese Austauschbarkeit des Wechselmoduls **95** mit der Möglichkeit der funktionsspezifischen Bestückung mit Prozesseinheiten **3** erlaubt den baukastenartigen und damit produktionseffizienten Aufbau einzelner Containments **9** wie auch einer aus einer Vielzahl miteinander verketteter Containments **9,** die eine Containment-Strasse **9'** bilden.

Das Wechselmodul **95** kann zusätzlich zu den Prozesseinheiten **3** eine Schleusenvorrichtung **96** zum Ein- und/oder Ausschleusen von Artikelteilen **7** oder Artikeln **6** aufweisen (s. Figur 1A). Die einzelne Prozesseinheit **3** kann als Waschstation, Trocknungsstation, Sterilisationsstation, Füllstation, Verschlussstation, Montage- oder Demontagestation, Kennzeichnungsstation oder Prüfstation beschaffen sein. Eine Prüfstation ist zur optischen Inspektion und/oder Gewichtskontrolle ausgebildet.

### Figur 6B

Auf diesem Wechselmodul **95** ist eine Prozesseinheit **3** in Gestalt einer Kappungsvorrichtung mit ihrem Aufnahmeraster **30** zum Aufbringen der Zweitverschlüsse **72** über die zuvor aufgebrachten ersten Verschlüsse **71** installiert. Die Zweitverschlüsse **72** dienen als Sicherung für den ersten Verschluss **71** und übergreifen diesen in der Art einer Bördelkappe.

### Figuren 7A und 7B

Diese Figurenfolge illustriert in einem Containment **9** die Produktionsschritte des Füllens von Behältnissen **70** und deren anschliessendes Verschliessen. Am eingangsseitigen Durchlass **917** befinden sich die im Tray **8** gemäss Sortierraster **800** bereitgestellten leeren Behältnisse **70.** In der Kammer **91** sind zunächst wiederum die beiden im Arbeitsmodus laufenden Roboter **1,2** vorhanden. Am Wechselmodul **95** ist eine Prozesseinheit **3** mit deren Aufnahmeraster **30** als Füllstation installiert. Es wird angenommen, dass vom ersten Roboter **1** die an der Prozesseinheit **3** mit der Füllung **79** versehenen Behältnisse **70** im zugehörigen Manipulierorgan **12** im Aufnahmeraster **120** hängend zu einem in der Luft schwebenden Übergabebereich transportiert wurden, dem sich mit seinem Manipulierorgan **22** der zweite Roboter **2** nähert. In diesem Manipulierorgan **22** sind gemäss Aufnahmeraster **220** erste Verschlüsse **71** ergriffen, z.B. als Stopfen, um in einem nächsten Produktionsschritt damit die gefüllten Behältnisse **70** zu verschliessen.

Die Verschlüsse **71** werden von einem im Prozessraum **93** vorhandenen Speicher **5,** in dem die Verschlüsse **71** bevorratet sind, bereitgestellt. Dem Speicher **5** ist ein Magazin **50** zur Auffüllung des Manipulierorgans **22** gemäss dessen Aufnahmeraster **220** mit einer gruppierten Anzahl von Verschlüssen **71** zugeordnet. Der Speicher **5** ist zur Befüllung des Magazins **50** mit einer Vibrationsvorrichtung versehen. Vorzugsweise ist der Speicher **5** ausserhalb der Kammer **91** zur Vermeidung störender Vibrationen abgestützt.

Nach dem Aufsetzen der ersten Verschlüsse **71** auf die gefüllten Behältnisse **70** könnten im einfachen Fall die Artikel 6 als fertig angesehen werden und würden als solche vom zweiten Roboter **2** zum ausgangsseitigen Durchlass **919** auf das dort stehende Tray **8** im Sortierraster **800** geliefert.

### Figuren 7C bis 7E

Dem Verschliessen der befüllten Behältnisse **70** ist oftmals eine Kontrolle der ordnungsgemässen Füllmenge mittels einer Prozesseinheit **3** in Gestalt einer Wägestation **35** vorgelagert, welche zur individuellen Gewichtsmessung jedes einzelnen der befüllten Behältnisse **70** bestimmt ist und sich vorzugsweise ausserhalb der Kammer **91** oder direkt ausserhalb des Containments **9** auf einem Fundament **F** abstützt und somit gegen Erschütterungen isoliert ist. Die Wägestation **35** hat ein Wägetablett **36** mit einem Aufnahmeraster **30,** das zu den anderen Aufnahmerastern **120,220;30,40** kompatibel sein sollte.

### Figur 8

Die beispielhaft dargestellte Containment-Strasse **9'** besteht aus fünf miteinander verketteten Containments **9** zur Durchführung verschiedener Produktionsschritte, beginnend bei der Bereitstellung leerer Behältnisse **70** am eingangsseitigen Durchlass **917** bis zum Ausstoss der fertigen Artikel **6** am ausgangsseitigen Durchlass **919.** Dazwischen liegen die Reinigung der Behältnisse **70,** das Einbringen der Füllung **79,** die Gewichtskontrolle und das Anbringen der ersten Verschlüsse **71** und ggfs. auch noch von Zweitverschlüssen **72.**

Der jeweilige Basisraum **92** und der jeweilige Prozessraum **93** des einzelnen Containments **9** besitzen eine jeweils aufgabenspezifische Bestückung mit Robotern **1,2** mit Manipulierorganen **12,22** und/oder Prozesseinheiten **3** und/oder Transferstationen **4** und/oder Speichern **5.**

Das erste Containment **9** hat den ersten Durchlass **917** für das Anliefern von Artikelteilen **7** in Gestalt von in einem Tray **8** systematisch gemäss Sortierraster **800** eingestellten Behältnissen **70** zum Prozessraum **93.** Somit lässt sich eine gruppierte Anzahl der Behältnisse **70** vom Manipulierorgan **12** des ersten Roboters 1 ergreifen und an die erste Prozesseinheit **3** zur Durchführung des ersten Produktionsschritts heranführen. Das erste Containment **9** hat ferner einen zweiten Durchlass **919** oder ist zu einem nächsten Containment **9** offen, zwecks Überführung der insoweit bearbeiteten Artikelteile **7** in den Prozessraum **93** des nächsten Containments **9** zur Durchführung nächster Produktionsschritte mittels weiterer Roboter **2** und weiterer Prozesseinheiten **3.** Das letzte Containment **9** der Containment-Strasse **9'** mit den darin installierten letzten Robotern **2** und letzten Prozesseinheiten **3** ist zur Durchführung abschliessender Produktionsschritte bestimmt. Dieses letzte Containment **9** besitzt den zweiten Durchlass **919,** durch den sich die fertig produzierten Artikel **6** ausliefern und auf einem Tray **8** positionieren lassen.

Nach Leerung der Trays **8** von den fertig produzierten Artikels **6** kann man durch den Tunnel **990** die Trays **8** wieder an die Ausgangsposition zum ersten Durchlass **917** am ersten Containment **9** für das weitere Anliefern von systematisch gemäss Sortierraster **800** eingestellten Behältnissen **70** rückführen.

## Patentansprüche

1. Konstruktiver Aufbau eines Containments **(9),** bestimmt zur automatisierten Produktion pharmazeutischer oder biotechnischer Artikel **(6),** wobei:
a) ein Artikel **(6)** als Endprodukt jeweils mehrere Artikelteile **(7)** umfasst;
b) das Containment **(9)** von einem Gehäuse **(90)** umgeben ist und sich darin eine innere Kammer **(91)** mit zumindest einem Durchlass **(917,919)** befindet;
c) in der Kammer **(91)** zumindest ein Roboter **(1,2)** installiert ist, der an seinem schwenkbaren Arm **(11,21)** zumindest ein Manipulierorgan **(12,22)** besitzt, welches innerhalb eines Schwenkbereichs (**R₁,R₂**) verfahrbar ist, und
d) die Kammer **(91)** zur Installation zumindest einer Prozesseinheit **(3)** zur Produktion der Artikel **(6)** geeignet ist, wobei
e) die Kammer **(91)** umfasst:
ea) einen Prozessraum **(93)** zur Produktion der Artikel **(6);** und
eb) einen wannenförmigen Basisraum **(92)** zur Verankerung des Fusses **(10,20)** des zumindest einen Roboters **(1,2)** an einer der Seitenflächen **(910,912,916,918)** innerlich des Basisraums **(92);** wobei
ec) der Prozessraum **(93)** oberhalb des Basisraums **(92)** angeordnet ist und beide kongruent offen zueinander angrenzen;
f) das Manipulierorgan **(12,22)** folgende Funktionen hat:
fa) Greifer und Transportmittel für die Artikel **(6)** oder Artikelteile **(7);** und/oder
fb) Inspektion der Artikel **(6)** oder Artikelteile **(7);** und/oder
fc) Produktion der Artikel (**6**) ; und
g) der Schwenkbereich (**R₁,R₂**) des zumindest einen Manipulierorgans **(12,22)** an dem zumindest einen Roboter **(1,2)** sich in horizontaler und vertikaler Ebene erstreckt, nämlich in vertikaler Ebene innerhalb eines Arbeitsbereichs **(a),** der sich zwischen einer minimalen Arbeitshöhe **(amin)** und einer maximalen Arbeitshöhe **(amax)** definiert.

2. Konstruktiver Aufbau nach Anspruch 1, **dadurch gekennzeichnet, dass** innerhalb des Schwenkbereichs (**R₁,R₂**) zumindest ein Übergabebereich vorgesehen ist, dazu bestimmt, mittels des Manipulierorgans **(12,22)** des zumindest einen Roboters **(1,2)** Artikel **(6)** oder Artikelteile **(7;70-72)** aufzunehmen oder zu positionieren.

3. Konstruktiver Aufbau nach Anspruch 1, **dadurch gekennzeichnet, dass** innerhalb des Schwenkbereichs (**R₁,R₂**) zwei Übergabebereiche vorgesehen sind; wobei:
a) der erste Übergabebereich dazu bestimmt ist, mittels des Manipulierorgans (**12,22**) des zumindest einen Roboters **(1,2)** Artikel **(6)** oder Artikelteile **(7;70-72)** aufzunehmen; und
b) der zweite Übergabebereich dazu bestimmt ist, mittels des Manipulierorgans (**12,22**) des zumindest einen Roboters **(1,2)** Artikel **(6)** oder Artikelteile **(7;70-72)** zu positionieren.

4. Konstruktiver Aufbau nach zumindest einem der Ansprüche 1 bis 3, **dadurch gekennzeichnet, dass**
a) ein erstes Containment **(9)** mit einem zweiten Containment **(9)** verbunden ist, in denen jeweils ein Roboter **(1,2)** installiert ist; und
b) einer der Übergabebereiche im Schwenkbereich (**R₁,R₂**) der Manipulierorgane (**12,22**) beider Roboter **(1,2)** liegt.

5. Konstruktiver Aufbau nach zumindest einem der Ansprüche 1 bis 3, **dadurch gekennzeichnet, dass**
a) im Containment **(9)** zumindest zwei Roboter **(1,2)** installiert sind; und
b) jeweils ein Übergabebereich im Schwenkbereich (**R₁,R₂**) der Manipulierorgane **(12,22)** zweier benachbarter Roboter **(1,2)** liegt.

6. Konstruktiver Aufbau nach zumindest einem der Ansprüche 1 bis 5, **dadurch gekennzeichnet, dass** im Prozessraum **(93)** des Containments **(9)** im Schwenkbereich (**R₁,R₂**) des Manipulierorgans **(12,22)** des zumindest einen Roboters **(1,2)** zumindest eine Prozesseinheit **(3)** zur Produktion der Artikel **(6)** installiert ist.

7. Konstruktiver Aufbau nach zumindest einem der Ansprüche 1 bis 6, **dadurch gekennzeichnet, dass**
a) die Prozesseinheit **(3)** als Waschstation, Trocknungsstation, Sterilisationsstation, Füllstation, Verschlussstation, Montage- oder Demontagestation, Kennzeichnungsstation oder Prüfstation ausgebildet ist; wobei
b) die Prüfstation zur optischen Inspektion und/oder Gewichtskontrolle beschaffen ist; und
c) im Prozessraum **(93)** mehrere Prozesseinheiten **(3)** verschiedener Funktionen installierbar sind.

8. Konstruktiver Aufbau nach zumindest einem der Ansprüche 1 bis 7, **dadurch gekennzeichnet, dass** zur Bildung eines Baukastensystems von Containments **(9)** ein vordefiniertes Positionsraster für die Verankerung des Fusses **(10,20)** des zumindest einen Roboters **(1,2)** an den Seitenflächen **(910,912,916,918)** innerlich des Basisraums **(92)** des jeweiligen Containments **(9)** vorgesehen ist.

9. Konstruktiver Aufbau nach zumindest einem der Ansprüche 1 bis 8, **dadurch gekennzeichnet, dass** der Basisraum **(92)** von einer geneigten Bodenfläche **(914)** begrenzt ist, welche die Abfuhr einer die Kammer **(91)** durchfliessenden Luftströmung **(L),** vorzugsweise laminarer Charakteristik, und im Prozessraum **(93)** bei der Produktion der Artikel **(6)** anfallender Flüssigkeiten begünstigt.

10. Konstruktiver Aufbau nach zumindest einem der Ansprüche 1 bis 9, **dadurch gekennzeichnet, dass** im Prozessraum **(93)** ferner angeordnet sind:
a) zumindest eine Transferstation **(4)** zur Zwischenpositionierung von Artikelteilen **(7)** und/oder Artikeln **(6);** und/oder
b) zumindest ein Speicher **(5)** zur Bevorratung von Artikelteilen **(7);** wobei
c) die Manipulierorgane **(12,22)** ein Aufnahmeraster **(120,220)** zur Aufnahme von einer gruppierten Anzahl von Artikelteilen **(7)** oder Artikeln **(6)** aufweisen; und
d) dem Speicher **(5)** ein Magazin **(50)** zur Auffüllung eines Manipulierorgans (**12,22**) gemäss dessen Aufnahmeraster **(120,220)** mit einer gruppierten Anzahl von Artikelteilen **(7)** zugeordnet sein kann.

11. Konstruktiver Aufbau nach zumindest einem der Ansprüche 1 bis 10, **dadurch gekennzeichnet, dass**
a) ein jeweiliges Aufnahmeraster **(30,40)** der Prozesseinheiten **(3)** und Transferstation **(4)** zum gleichzeitigen Handling einer gruppierten Anzahl von Artikelteilen **(7)** oder Artikeln **(6)** zahlenmässig und geometrisch komplementär zum Aufnahmeraster **(120,220)** der Manipulierorgane **(12,22)** ausgebildet ist; und
b) das Manipulierorgan **(12,22)** zusätzlich mit einer Montage- oder Demontagevorrichtung, einer Inspektionsvorrichtung und/oder einer Verschlussvorrichtung und/oder einer Kennzeichnungsvorrichtung ausgestattet sein kann.

12. Konstruktiver Aufbau nach zumindest einem der Ansprüche 1 bis 11, **dadurch gekennzeichnet, dass**
a) in eine der den Prozessraum **(93)** abgrenzenden Gehäuseflächen **(910,912,916,918)** ein austauschbares Wechselmodul **(95)** einsetzbar ist, welches mit funktionsspezifischen Prozesseinheiten **(3)** bestückt ist;
b) das Wechselmodul **(95)** zusätzlich zu den Prozesseinheiten **(3)** eine Schleusenvorrichtung **(96)** zum Ein- und/oder Ausschleusen von Artikelteilen **(7)** oder Artikeln **(6)** aufweisen kann; und
c) funktionsmässig gleichartige Prozesseinheiten **(3)** in zueinander versetzten Kaskaden angeordnet sein können.

13. Konstruktiver Aufbau nach zumindest einem der Ansprüche 1 bis 12, **dadurch gekennzeichnet, dass**
a) ein erstes Containment **(9)** mit weiteren Containments **(9)** in einer Produktionslinie miteinander zu einer Containment-Strasse **(9')** verkettet ist; wobei
b) der jeweilige Basisraum **(92)** und der jeweilige Prozessraum **(93)** eine jeweils aufgabenspezifische Bestückung mit Robotern **(1,2),** Manipulierorganen (**12,22**) und/oder Prozesseinheiten **(3)** und/oder Transferstationen **(4)** und/oder Speichern **(5)** besitzen können.

14. Konstruktiver Aufbau nach zumindest einem der Ansprüche 1 bis 13, **dadurch gekennzeichnet, dass** sich der Schwenkbereich (**R₁,R₂**) des zumindest einen Manipulierorgans **(12,22)** an dem zumindest einen Roboter **(1,2)** in horizontaler Ebene zumindest bis über eine der vertikalen Flächen **(910,912,916,918)** des Prozessraums **(93)** hinaus erstreckt.

15. Konstruktiver Aufbau nach zumindest einem der Ansprüche 13 und 14, **dadurch gekennzeichnet, dass**
a) das erste Containment **(9)** einen ersten Durchlass **(917)** für das Anliefern von Artikelteilen **(7)** in Gestalt von in einem Tray **(8)** systematisch gemäss einem Sortierraster **(800)** eingestellten Behältnissen **(70)** zum Prozessraum **(93)** hat, und somit sich eine gruppierte Anzahl der Behältnisse **(70)** vom Manipulierorgan **(12)** des ersten Roboters **(1)** ergreifen lässt und an die erste Prozesseinheit **(3)** zur Durchführung des ersten Produktionsschritts heranführbar ist;
b) das erste Containment **(9)** einen zweiten Durchlass **(919)** hat oder zu einem nächsten Containment **(9)** offen ist, zwecks Überführung der insoweit bearbeiteten Artikelteile **(7)** in den Prozessraum **(93)** des nächsten Containments **(9)** zur Durchführung nächster Produktionsschritte mittels weiterer Roboter **(2)** und weiterer Prozesseinheiten **(3);**
c) das letzte Containment **(9)** der Containment-Strasse **(9')** mit den darin installierten letzten Robotern **(2)** und letzten Prozesseinheiten **(3)** zur Durchführung abschliessender Produktionsschritte bestimmt ist; und
d) dieses letzte Containment **(9)** einen zweiten Durchlass **(919)** besitzt, durch den sich die fertig produzierten Artikel **(6)** ausliefern lassen.

16. Konstruktiver Aufbau nach zumindest einem der Ansprüche 11 bis 15, **dadurch gekennzeichnet, dass** das Aufnahmeraster **(120,220)** der Manipulierorgane **(12,22)** mittels einer Stellmechanik verstellbar ausgebildet ist, um bei zunächst vorhandener Abweichung des Sortierrasters **(800)** zu den Aufnahmerastern **(30,40)** der Prozesseinheiten **(3)** und Transferstation **(4)** Kompatibilität herzustellen.

17. Konstruktiver Aufbau nach zumindest einem der Ansprüche 1 bis 16, **dadurch gekennzeichnet, dass** der fertig produzierte Artikel **(6)** als Artikelteile **(7)** umfasst:
a) ein Behältnis **(70);**
b) eine in das Behältnis **(70)** durch dessen Einfüllöffnung (**73**) applizierte pharmazeutische oder biotechnische Füllung **(79)** als Flüssigkeit oder Pulver;
c) einen ersten Verschluss **(71)** in Gestalt eines Stopfens oder eines thermisch erzeugten Verschlusses; und
d) einen optionalen zweiten Verschluss **(72)** in Gestalt eines den ersten Verschluss **(71)** formschlüssig übergreifenden Elements, z.B. eine Bördelkappe, als Sicherung für den ersten Verschluss **(71).**

18. Konstruktiver Aufbau nach zumindest einem der Ansprüche 1 bis 17, **dadurch gekennzeichnet, dass**
a) eine Prozesseinheit **(3)** die Gestalt einer Wägestation **(35)** hat, welche sich ausserhalb der Kammer **(91)** oder direkt ausserhalb des Containments **(9)** auf einem Fundament **(F)** abstützt und somit gegen Erschütterungen isoliert ist;
b) die Wägestation **(35)** ein Wägetablett **(36)** mit einem zu den übrigen Aufnahmerastern **(120,220;30,40)** kompatiblen Aufnahmeraster **(30)** hat, das bestimmt ist:
ba) zum Einsetzen einer vom Manipulierorgan **(12,22)** abgesetzten gruppierten Anzahl von mit der Füllung **(79)** versehenen Behältnissen **(70);** und
bb) zur individuellen Gewichtsmessung jedes einzelnen der befüllten Behältnisse **(70)** bestimmt ist; und
c) der Speicher **(5)** mit einer Vibrationsvorrichtung versehen ist, zwecks Befüllung des Magazins **(50);** wobei
d) der Speicher **(5)** ausserhalb der Kammer **(91)** zur Vermeidung störender Vibrationen abgestützt ist.

19. Konstruktiver Aufbau nach zumindest einem der Ansprüche 1 bis 18, **dadurch gekennzeichnet, dass**
a) sich durch das einzelne Containment **(9)** und die Containment-Strasse **(9')** ein Tunnel **(990)** erstreckt; und
b) der Tunnel **(990)** dazu dient, die am ersten Durchlass **(917)** von Behältnissen **(70)** geleerten Trays **(8)** bei Umgehung der Kammer **(91)** am zweiten Durchlass **(919)** zur Aufnahme der fertig produzierten Artikel **(6)** wieder bereitzustehen.

20. Konstruktiver Aufbau nach zumindest einem der Ansprüche 1 bis 19, **dadurch gekennzeichnet, dass** das Containment **(9)** ausgebildet ist als:
a) offenes oder geschlossenes Barriere-System mit beschränktem Eingriff (RABS = Restricted Access Barrier System) mit einer Luftbehandlungsvorrichtung mit Reinraumklassifikation; oder
b) Isolator mit einer Luftbehandlungsvorrichtung mit Reinraumklassifikation und Dekontaminationsvorrichtung; wobei
c) die Luftbehandlungsvorrichtung einen Zuluftfilter **(94)** hat, der oberhalb des Prozessraums **(93)** angeordnet ist, und einen Abluftfilter **(940)** aufweist, welcher in einer am Basisraum **(92)** vorhandenen Aufnahme installiert ist.

## Claims

1. A constructive structure of a containment **(9),** intended for the automated production of pharmaceutical or biotechnical articles **(6),** wherein:
a) an article **(6),** as end product, in each case comprises a plurality of article parts **(7);**
b) the containment **(9)** is surrounded by a housing **(90)** within which there is an inner chamber **(91)** having at least one through-opening **(917,919);**
c) at least one robot **(1,2)** is installed in the chamber **(91),** which robot **(1,2)** has at least one manipulating element **(12,22)** on its pivotable arm **(11,21),** which can move within a pivot range (**R₁,R₂**), and
d) the chamber **(91)** is suitable for the installation of at least one process unit **(3)** for the production of the articles **(6),** wherein
e) the chamber **(91)** comprises:
ea) a process space **(93)** for the production of the articles **(6);** and
eb) a tub-shaped base space **(92)** for anchoring the foot **(10,20)** of the at least one robot **(1,2)** to one of the side faces **(910,912,916,918)** inside the base space **(92);** wherein
ec) the process space **(93)** is arranged above the base space **(92)** and both adjoin each other in a congruent and open manner;
f) the manipulating element **(12,22)** has the following functions:
fa) gripping means and transporting means for the articles **(6)** or article parts **(7);** and/or
fb) inspection of the articles **(6)** or article parts **(7);** and/or
fc) production of the articles **(6);** and
g) the pivot range (**R₁,R₂**) of the at least one manipulating element **(12,22)** on the at least one robot **(1,2)** extends in a horizontal and vertical plane, namely in a vertical plane within a working region **(a),** which is defined between a minimum working height **(amin)** and a maximum working height **(aₘₐₓ).**

2. The constructive structure as claimed in claim 1, **characterized in that**, within the pivot range (**R₁,R₂**), at least one transfer region is provided which is intended to pick up or position articles **(6)** or article parts (**7;70-72**) by means of the manipulating element **(12,22)** of the at least one robot **(1,2).**

3. The constructive structure as claimed in claim 1, **characterized in that** two transfer regions are provided within the pivot range (**R₁,R₂**); wherein:
a) the first transfer region is intended for picking up articles **(6)** or article parts (**7;70-72**) by means of the manipulating element **(12,22)** of the at least one robot **(1,2);** and
b) the second transfer region is intended for positioning articles **(6)** or article parts **(7;70-72)** by means of the manipulating element **(12,22)** of the at least one robot **(1,2).**

4. The constructive structure as claimed in at least one of claims 1 through 3, **characterized in that**
a) a first containment **(9)** is connected to a second containment **(9),** in each of which a robot **(1,2)** is installed; and
b) one of the transfer regions lies in the pivot range (**R₁,R₂**) of the manipulating elements **(12,22)** of both robots **(1,2).**

5. The constructive structure as claimed in at least one of claims 1 through 3, **characterized in that**
a) at least two robots **(1,2)** are installed in the containment **(9);** and
b) a transfer region lies in each case in the pivot range (**R₁,R₂**) of the manipulating elements **(12,22)** of two adjacent robots **(1,2).**

6. The constructive structure as claimed in at least one of claims 1 through 5, **characterized in that** at least one process unit **(3)** for production of the articles **(6)** is installed in the process space **(93)** of the containment **(9)** in the pivot range (**R₁,R₂**) of the manipulating element **(12,22)** of the at least one robot **(1,2).**

7. The constructive structure as claimed in at least one of claims 1 through 6, **characterized in that**
a) the process unit **(3)** is configured as a washing station, drying station, sterilizing station, filling station, closing station, assembly or disassembly station, identification station or test station; wherein
b) the test station is set up for optical inspection and/or weight control; and
c) a plurality of process units **(3)** with various functions can be installed in the process space **(93).**

8. The constructive structure as claimed in at least one of claims 1 through 7, **characterized in that**, in order to form a modular system of containments **(9),** a predefined positioning grid is provided for anchoring the foot **(10,20)** of the at least one robot **(1,2)** to the side faces **(910,912,916,918)** inside the base space **(92)** of the respective containment **(9).**

9. The constructive structure as claimed in at least one of claims 1 through 8, **characterized in that** the base space **(92)** is delimited by an inclined bottom face **(914)** which promotes the removal of an airflow **(L),** preferably of a laminar nature, flowing through the chamber **(91)** and of liquids that arise in the process space **(93)** during the production of the articles **(6).**

10. The constructive structure as claimed in at least one of claims 1 through 9, **characterized in that** the following are moreover arranged in the process space **(93):**
a) at least one transfer station **(4)** for interim positioning of article parts **(7)** and/or articles **(6);** and/or
b) at least one storage **(5)** for storing article parts **(7);** wherein
c) the manipulating elements **(12,22)** have a pick-up grid **(120,220)** for picking up a grouped number of article parts **(7)** or articles **(6);** and
d) the storage **(5)** can be assigned a magazine **(50)** for filling a manipulating element **(12,22),** according to its pick-up grid **(120,220),** with a grouped number of article parts **(7).**

11. The constructive structure as claimed in at least one of claims 1 through 10, **characterized in that**
a) a respective pick-up grid **(30,40)** of the process units **(3)** and transfer station **(4)** is configured to simultaneously handle a grouped number of article parts **(7)** or articles **(6)** in a manner numerically and geometrically matching the pick-up grid **(120,220)** of the manipulating elements **(12,22);** and
b) the manipulating element **(12,22)** can additionally be equipped with an assembly or disassembly device, an inspection device and/or a closing device and/or an identification device.

12. The constructive structure as claimed in at least one of claims 1 through 11, **characterized in that**
a) a replaceable exchange module **(95),** which is equipped with function-specific process units **(3),** is insertable into one of the housing faces **(910,912,916,918)** delimiting the process space **(93);**
b) the exchange module **(95)** can have, in addition to the process units **(3),** a lock device **(96)** for loading/unloading article parts **(7)** or articles **(6);** and
c) functionally identical process units **(3)** can be arranged in mutually staggered cascades.

13. The constructive structure as claimed in at least one of claims 1 through 12, **characterized in that**
a) a first containment **(9)** is linked to further containments **(9)** in a production line to form a containment chain **(9');** wherein
b) the respective base space **(92)** and the respective process space **(93)** can be equipped in a task-specific manner with robots **(1,2),** manipulating elements **(12,22)** and/or process units **(3)** and or transfer stations **(4)** and/or storages **(5).**

14. The constructive structure as claimed in at least one of claims 1 through 13, **characterized in that** the pivot range (**R₁,R₂**) of the at least one manipulating element **(12,22)** on the at least one robot **(1,2)** extends in a horizontal plane at least beyond one of the vertical faces **(910,912,916,918)** of the process space **(93).**

15. The constructive structure as claimed in at least one of claims 13 and 14, **characterized in that**
a) the first containment **(9)** has a first through-opening **(917)** via which article parts **(7),** in the form of receptacles **(70)** placed in a tray **(8)** systematically according to a sorting grid **(800),** are delivered to the process space **(93),** and thus a grouped number of the receptacles **(70)** can be gripped by the manipulating element **(12)** of the first robot **(1)** and brought to the first process unit **(3)** in order to carry out the first production step;
b) the first containment **(9)** has a second through-opening **(919)** or is open toward a next containment **(9)** for the purpose of transferring the article parts **(7),** processed thus far, into the process space **(93)** of the next containment **(9)** in order to carry out subsequent production steps by means of further robots **(2)** and further process units **(3);**
c) the final containment **(9)** of the containment means chain **(9'),** with the final robots **(2)** and final process units **(3)** installed therein, is intended for carrying out final production steps; and
d) this final containment **(9)** has a second through-opening **(919)** through which the finished produced articles **(6)** can be output.

16. The constructive structure as claimed in at least one of claims 11 through 15, **characterized in that** the pick-up grid **(120,220)** of the manipulating elements **(12,22)** is designed to be adjustable by an adjustment mechanism, in order to establish compatibility if the sorting grid **(800)** initially deviates from the pick-up grids **(30,40)** of the process units **(3)** and transfer station **(4).**

17. The constructive structure as claimed in at least one of claims 1 through 16, **characterized in that** the finished produced article **(6)** comprises as article parts **(7):**
a) a receptacle **(70);**
b) a pharmaceutical or biotechnical filling **(79)** as liquid or powder introduced into the receptacle **(70)** through the filling opening **(73)** of the latter;
c) a first closure **(71)** in the form of a stopper or of a thermally produced closure; and
d) an optional second closure **(72)** in the form of an element, e.g. a crimped cap, engaging with a form fit over the first closure **(71)** and serving to secure the first closure **(71).**

18. The constructive structure as claimed in at least one of claims 1 through 17, **characterized in that**
a) a process unit **(3)** has the form of a weighing station **(35)** which is supported on a foundation **(F)** outside the chamber **(91)** or directly outside the containment **(9)** and is thus insulated from shocks;
b) the weighing station **(35)** has a weighing tray **(36)** with a pick-up grid **(30)** which is compatible with the other pick-up grids **(120,220;30,40)** and which is intended:
ba) for the insertion of a grouped number of receptacles **(70)** provided with the filling **(79)** and deposited by the manipulating element **(12,22);** and
bb) for individual weight measurement of each one of the filled receptacles **(70);** and
c) the storage **(5)** is provided with a vibration device for the purpose of filling the magazine **(50);** wherein
d) the storage **(5)** is supported outside the chamber **(91)** in order to avoid interference vibrations.

19. The constructive structure as claimed in at least one of claims 1 through 18, **characterized in that**
a) a tunnel **(990)** extends through the individual containment **(9)** and the containment chain **(9');** and
b) the tunnel **(990)** serves to ensure that the trays **(8)** emptied of receptacles **(70)** at the first through-opening **(917)** bypass the chamber **(91)** and are made available again at the second through-opening **(919)** in order to pick up the finished produced articles **(6).**

20. The constructive structure as claimed in at least one of claims 1 through 19, **characterized in that** the containment **(9)** is configured as:
a) an open or closed restricted access barrier system (RABS) with an air treatment device of clean-room classification; or
b) an isolator with an air treatment device of clean-room classification and a decontamination device; wherein
c) the air treatment device has an inflow air filter **(94),** which is arranged above the process space **(93),** and an outflow air filter **(940),** which is installed in a seat present at the base space **(92).**

## Revendications

1. Structure constructive d'une enceinte de confinement **(9),** destinée à la production automatisée d'articles **(6)** pharmaceutiques ou biotechnologiques, avec laquelle:
a) un article **(6)** en tant que produit fini comprend respectivement plusieurs parties d'article **(7);**
b) l'enceinte de confinement **(9)** est entourée par un boîtier **(90)** et une chambre interne **(91)** comprenant au moins un passage **(917,919)** se trouve dans celui-ci;
c) au moins un robot **(1,2)** est installé dans la chambre **(91),** lequel possède, à son bras **(11,21)** pivotant, au moins un organe de manipulation **(12,22)** qui peut être déplacé à l'intérieur d'une zone de pivotement (**R₁,R₂**); et
d) la chambre **(91)** est adaptée pour l'installation d'au moins une unité de processus **(3)** destinée à la production de l'article **(6),**
e) la chambre **(91)** comprenant:
ea) un espace de processus **(93)** destiné à la production de l'article **(6);** et
eb) un espace de base **(92)** en forme de bac servant à l'ancrage du pied (**10,20**) de l'au moins un robot **(1,2)** à l'une des surfaces latérales **(910,912,916,918)** à l'intérieur de l'espace de base **(92);**
ec) l'espace de processus **(93)** étant disposé au-dessus de l'espace de base **(92)** et les deux étant adjacents l'un à l'autre avec ouverture congruente;
f) l'organe de manipulation **(12,22)** ayant les fonctions suivantes:
fa) préhenseur et moyen de transport pour les articles **(6)** ou les parties d'article **(7);** et/ou
fb) inspection des articles **(6)** ou des parties d'article **(7)** et/ou
fc) production des articles **(6);** et
g) la zone de pivotement (**R₁,R₂**) de l'au moins un organe de manipulation (**12,22**) sur l'au moins un robot **(1,2)** s'étendant dans des plans horizontal et vertical, à savoir dans le plan vertical à l'intérieur d'une zone de travail **(a)** qui est définie entre une hauteur de travail minimale (**aₘᵢₙ**) et une hauteur de travail maximale **(amax).**

2. Structure constructive selon la revendication 1, caractérisée en ce qu'au moins une zone de transfert se trouve à l'intérieur de la zone de pivotement (**R₁,R₂**), laquelle est conçue pour la prise en charge ou le positionnement des articles **(6)** ou des parties d'article (**7;70-72**) au moyen de l'organe de manipulation **(12,22)** de l'au moins un robot **(1,2).**

3. Structure constructive selon la revendication 1, **caractérisée en ce que** deux zones de transfert se trouvent à l'intérieur de la zone de pivotement (**R₁,R₂**):
a) la première zone de transfert étant conçue pour la prise en charge des articles **(6)** ou des parties d'article (**7;70-72**) au moyen de l'organe de manipulation **(12,22)** de l'au moins un robot **(1,2);** et
b) la deuxième zone de transfert étant conçue pour le positionnement des articles **(6)** ou des parties d'article **(7;70-72)** au moyen de l'organe de manipulation **(12,22)** de l'au moins un robot **(1,2).**

4. Structure constructive selon au moins l'une des revendications 1 à 3, **caractérisée en ce que**
a) une première enceinte de confinement **(9)** est reliée à une deuxième enceinte de confinement **(9),** dans lesquelles est respectivement installé un robot **(1,2);** et
b) l'une des zones de transfert se trouve dans la zone de pivotement (**R₁,R₂**) des organes de manipulation **(12,22)** des deux robots **(1,2).**

5. Structure constructive selon au moins l'une des revendications 1 à 3, **caractérisée en ce que**
a) au moins deux robots **(1,2)** sont installés dans l'enceinte de confinement **(9);** et
b) une zone de transfert se trouve respectivement dans la zone de pivotement (**R₁,R₂**) des organes de manipulation **(12,22)** de deux robots **(1,2)** voisins.

6. Structure constructive selon au moins l'une des revendications 1 à 5, caractérisée en ce qu'au moins une unité de processus **(3)** destinée à la production des articles **(6)** est installée dans l'espace de processus **(93)** de l'enceinte de confinement **(9)** dans la zone de pivotement (**R₁,R₂**) de l'organe de manipulation **(12,22)** de l'au moins un robot **(1,2).**

7. Structure constructive selon au moins l'une des revendications 1 à 6, **caractérisée en ce que**
a) l'unité de processus **(3)** est réalisée sous la forme d'une station de lavage, d'une station de séchage, d'une station de stérilisation, d'une station de remplissage, d'une station de fermeture, d'une station de montage et de démontage, d'une station de marquage ou d'une station de contrôle;
b) la station de contrôle étant réalisée pour l'inspection optique et/ou le contrôle du poids; et
c) plusieurs unités de processus **(3)** qui ont différentes fonctions pouvant être installées dans l'espace de processus **(93).**

8. Structure constructive selon au moins l'une des revendications 1 à 7, caractérisée en ce qu'en vue de former un système modulaire d'enceintes de confinement **(9),** une grille de positionnement prédéfinie est prévue pour l'ancrage du pied **(10,20)** de l'au moins un robot **(1,2)** aux surfaces latérales **(910,912,916,918)** à l'intérieur de l'espace de base **(92)** de l'enceinte de confinement **(9)** respective.

9. Structure constructive selon au moins l'une des revendications 1 à 8, **caractérisée en ce que** l'espace de base **(92)** est délimité par une surface de fond **(914)** inclinée qui favorise l'évacuation d'un courant d'air **(L),** de préférence de caractéristique laminaire, qui s'écoule à travers la chambre **(91),** et des liquides générés dans l'espace de processus **(93)** lors de la production des articles **(6).**

10. Structure constructive selon au moins l'une des revendications 1 à 9, **caractérisée en ce que** les éléments suivants sont en outre disposés dans l'espace de processus **(93):**
a) au moins une station de transfert **(4)** servant au positionnement intermédiaire de parties d'article **(7)** et/ou d'articles **(6);** et/ou
b) au moins un dispositif de stockage **(5)** destiné à tenir en réserve des parties d'article **(7);**
c) les organes de manipulation **(12,22)** possédant une grille d'accueil **(120,220)** servant à accueillir un nombre groupé de parties d'article **(7)** ou d'articles **(6);** et
d) un magasin **(50)** destiné à remplir un organe de manipulation **(12,22)** avec un nombre groupé de parties d'article **(7)** conformément à sa grille d'accueil **(120,220)** pouvant être associé au dispositif de stockage **(5).**

11. Structure constructive selon au moins l'une des revendications 1 à 10, **caractérisée en ce que**
a) une grille d'accueil **(30,40)** respective des unités de processus **(3)** et de la station de transfert **(4)** est configurée pour la manipulation simultanée d'un nombre groupé de parties d'article **(7)** ou d'articles **(6)** de manière numériquement et géométriquement complémentaire à la grille d'accueil **(120,220)** des organes de manipulation **(12,22);** et
b) l'organe de manipulation **(12,22)** peut en plus être équipé d'un dispositif de montage ou de démontage, d'un dispositif d'inspection et/ou d'un dispositif de fermeture et/ou d'un dispositif de marquage.

12. Structure constructive selon au moins l'une des revendications 1 à 11, **caractérisée en ce que**
a) un module interchangeable **(95)** remplaçable, qui est équipé d'unités de processus **(3)** à fonction spécifique, peut être installé dans l'une des surfaces de boîtier **(910,912,916,918)** qui délimitent l'espace de processus **(93);**
b) le module interchangeable **(95),** en plus des unités de processus **(3),** peut posséder un dispositif de sas **(96)** servant à introduire et/ou à faire sortir des parties d'article **(7)** ou des articles **(6)** à travers un sas; et
c) des unités de processus **(3)** fonctionnellement du même type peuvent être disposées dans des cascades décalées les unes par rapport aux autres.

13. Structure constructive selon au moins l'une des revendications 1 à 12, **caractérisée en ce que**
a) une première enceinte de confinement **(9)** est enchaînée avec des enceintes de confinement **(9)** supplémentaires en une ligne de production pour former une chaîne d'enceintes de confinement **(9');**
b) l'espace de base **(92)** respectif et l'espace de processus **(93)** respectif pouvant posséder un équipement spécifique à la tâche en robots **(1,2),** organes de manipulation **(12,22)** et/ou unités de processus **(3)** et/ou stations de transfert **(4)** et/ou dispositifs de stockage **(5).**

14. Structure constructive selon au moins l'une des revendications 1 à 13, **caractérisée en ce que** la zone de pivotement (**R₁,R₂**) de l'au moins un organe de manipulation **(12,22)** au niveau de l'au moins un robot **(1,2)** s'étend dans le plan horizontal au moins jusqu'au-delà de l'une des surfaces verticales **(910,912,916,918)** de l'espace de processus **(93).**

15. Structure constructive selon au moins l'une des revendications 13 et 14, caractérisée en ce
a) la première enceinte de confinement **(9)** comprend un premier passage **(917)** pour la livraison de parties d'article **(7)** vers l'espace de processus **(93)** sous la forme de contenants **(70)** systématiquement réglés conformément à une grille de tri **(800)** dans un plateau **(8),** et un nombre groupé de contenants **(70)** se laisse ainsi saisir par l'organe de manipulation **(12)** du premier robot **(1)** et peut être acheminé contre la première unité de processus **(3)** en vue d'exécuter la première étape de production;
b) la première enceinte de confinement **(9)** comprend un deuxième passage **(919)** ou est ouverte vers une deuxième enceinte de confinement **(9)** en vue de transférer les parties d'article **(7)** traitées jusqu'à ce point dans l'espace de processus **(93)** de l'enceinte de confinement **(9)** suivante en vue d'exécuter les étapes de production suivantes au moyen de robots **(2)** supplémentaires et d'unités de processus **(3)** supplémentaires;
c) la dernière enceinte de confinement **(9)** de la chaîne d'enceintes de confinement **(9'),** avec les derniers robots **(2)** et les dernières unités de processus **(3)** qui sont installés, est conçue pour exécuter les étapes de production finales; et
d) cette dernière enceinte de confinement **(9)** possède un deuxième passage **(919)** à travers lequel peuvent être délivrés les articles **(6)** produits finis.

16. Structure constructive selon au moins l'une des revendications 11 à 15, **caractérisée en ce que** la grille d'accueil **(120,220)** des organes de manipulation **(12,22)** est configurée de manière positionnable au moyen d'un mécanisme de commande en vue d'établir la compatibilité en présence d'un écart initialement présent de la grille de tri **(800)** par rapport à la grille d'accueil (**30,40**) des unités de processus **(3)** et de la station de transfert **(4).**

17. Structure constructive selon au moins l'une des revendications 1 à 16, **caractérisée en ce que** l'article **(6)** produit fini comprend en tant que parties d'article **(7):**
a) un contenant **(70);**
b) une charge **(79)** pharmaceutique ou biotechnologique sous la forme de liquide ou de poudre, appliquée dans le contenant **(70)** à travers son ouverture de remplissage **(73);**
c) une première fermeture **(71)** sous la forme d'un bouchon ou d'une fermeture générée thermiquement; et
d) une deuxième fermeture **(72)** optionnelle sous la forme d'un élément qui recouvre la première fermeture **(71)** par complémentarité de formes, par exemple un capuchon serti, servant de sécurité pour la première fermeture **(71).**

18. Structure constructive selon au moins l'une des revendications 1 à 17, **caractérisée en ce que**
a) une unité de processus **(3)** a la forme d'une station de pesage **(35)** qui s'appuie en-dehors de la chambre **(91)** ou directement en-dehors de l'enceinte de confinement **(9)** sur une fondation **(F)** et est ainsi isolée contre les secousses;
b) la station de pesage **(35)** comprend une tablette de pesage **(36)** ayant une grille d'accueil **(30)** compatible avec les autres grilles d'accueil **(120,220;30,40),** qui est conçue pour:
ba) charger un nombre groupé, déposé par l'organe de manipulation **(12,22),** de contenants **(70)** pourvus de la charge **(79);** et
bb) mesurer individuellement le poids de chaque contenant **(70)** rempli individuel; et
c) le dispositif de stockage **(5)** est pourvu d'un dispositif de vibration en vue de remplir le magasin **(50);**
d) le dispositif de stockage **(5)** prenant appui en-dehors de la chambre **(91)** en vue d'éviter les vibrations perturbatrices.

19. Structure constructive selon au moins l'une des revendications 1 à 18, **caractérisée en ce que**
a) un tunnel **(990)** s'étend à travers l'enceinte de confinement **(9)** individuelle et la chaîne d'enceintes de confinement **(9');** et
b) le tunnel **(990)** sert à remettre à disposition les plateaux **(8)** vidés au niveau du premier passage **(917)** de contenants **(70)** lors du contournement de la chambre **(91)** au niveau du deuxième passage **(919)** en vue de prendre en charge les articles **(6)** produits finis.

20. Structure constructive selon au moins l'une des revendications 1 à 19, **caractérisée en ce que** l'enceinte de confinement **(9)** est réalisée sous la forme de:
a) un système formant barrière ouvert ou fermé à accès limité (RABS = Restricted Access Barrier System) comprenant un dispositif de traitement de l'air avec classification salle blanche; ou
b) un isolateur comprenant un dispositif de traitement de l'air avec classification salle blanche et un dispositif de décontamination;
c) le dispositif de traitement de l'air comprenant un filtre d'arrivée d'air **(94)** qui est disposé au-dessus de l'espace de processus **(93)** et possède un filtre à air vicié **(940)** qui est installé dans un logement présent au niveau de l'espace de base **(92).**
